# EUROPEAN PATENT APPLICATION

(11) **EP 4 549 042 A1**
(43) Date of publication of application: **07.05.2025**
(21) Application number: 23854884.6
(22) Date of filing: 14.08.2023
(51) Int. Cl.: B21D 22/00, B21D 22/26, G06F 30/20, G06F 113/22

(54) **METHOD FOR MANUFACTURING PRESS-MOLDED ARTICLE**

(30) Priority: 19.08.2022 JP 2022130912; 13.12.2022 JP 2022198306
(71) Applicant: JFE Steel Corporation, Tokyo 100-0011 (JP)
(72) Inventor: OGAWA Takeshi, Tokyo 100-0011 (JP); SHINMIYA Toyohisa, Tokyo 100-0011 (JP); SUMIKAWA Satoshi, Tokyo 100-0011 (JP)
(74) Representative: Grünecker Patent- und Rechtsanwälte PartG mbB
(86) International application number: PCT/JP2023/029453
(87) International publication number: WO 2024/038850

(57) **Abstract**

The press-formed article manufacturing method includes: a reference press-formed article shape acquisition step of acquiring a reference press-formed article shape; a first actual blank press-formed article shape acquisition step of acquiring a first actual blank press-formed article shape; a first actual deviation amount acquisition step of finding first actual deviation amounts between the reference press-formed article shape and the first actual blank press-formed article shape; a second actual blank press-formed article shape acquisition step of acquiring a second actual blank press-formed article shape; a second actual deviation amount acquisition step of finding second actual deviation amounts between the reference press-formed article shape and the second actual blank press-formed article shape; a measures-required portion specifying step of specifying measures-required portions; a bead providing step of providing beads for an actual die; and an actual press forming step of performing press forming with use of the actual die provided with the beads.

## Description

### Technical Field

The present invention relates to a technology for manufacturing a press-formed article by performing press forming on a blank extracted from a metal sheet having a shape variation. The present invention relates to a press-formed article manufacturing method that can reduce the influence of a shape variation of a blank.

### Background Art

Due to stricter collision safety standards for automobiles, improvement in collision safety for vehicle bodies has been highly demanded. In addition to the demand, in order to improve fuel efficiency of automobiles in response to carbon dioxide emission regulations in these days, it is also necessary to reduce the weight of vehicle bodies. In order to simultaneously improve the collision safety and reduce the weight of vehicle bodies, metal sheets further improved in strength as compared with conventional metal sheets tend to be applied to vehicle bodies.

A press-formed article is manufactured by performing press forming on a blank. An actual metal sheet from which the blank for press forming is extracted does not necessarily have a completely flat surface but may have corrugations (a shape variation) along its surface in the related art.

Accordingly, an actual blank extracted from the metal sheet may not be necessarily flat and may have a shape variation.

In a case where press forming is performed on such a blank having a shape variation into a vehicle body component, a press-formed article provided after the press forming may be influenced by the shape variation and may deviate from a target dimensional accuracy.

Patent Documents 1 and 2 describe technologies for selecting an article deviating from a target dimensional accuracy out of press-formed articles provided after press forming, for example.

Patent Document5 describes the use of a developed blank in performing press forming of a crash box.

Patent Document3 describes a technology for providing a flange portion with a bead in order to equalize residual stress in a press-formed article for the purpose of restraining spring back caused in the press-formed article. Further, Patent Document 4 describes a technology for restraining spring back such that a bead is provided for a die in drawing to restrain a material flow during press forming.

### Citation List

### Patent Literatures

Patent Document 1: JP 62-047504 A
Patent Document 2: JP 2019-002834 A
Patent Document 3: JP 2009-255117 A
Patent Document 4: JP 2012-166225 A
Patent Document 5: WO 2015-053075

### Summary of Invention

### Technical Problem

The technology described in Patent Documents 1 and 2 are to compare shapes of formed articles after press forming with each other and is not intended to reduce the influence of a shape variation of a blank before press forming.

In the related art, which portion of a press-formed article is easily influenced by a shape variation of a blank is also not specified, and it is difficult to take measures.

Besides, a blank to be used for press forming is extracted from a metal sheet such as a steel sheet by punching or shearing. Accordingly, in a case where a plurality of blanks is extracted from a metal sheet having a shape variation, the blanks are extracted from different positions, and therefore, even the blanks extracted from the same metal sheet have recesses and protrusions in different portions.

Accordingly, in order to reduce the influence of a shape variation of a blank, it is necessary to take measures in consideration that individual blanks have different shape variations.

In performing press forming of a press-formed article, a developed blank having a shape obtained by developing a press-formed article to a plane is used in the related art as described in Patent Document 5, for example. However, the technology described in Patent Document 5 is not to specify a shape variation portion of a blank before press forming and take measures for the shape variation portion. The shape variation portion influences the dimension accuracy of a press-formed article to be provided after press forming.

Patent Documents 3 and 4 describes a technology to restrain spring back by providing beads. However, the beads are to equalize or reduce stress remaining in a press-formed article released after press forming due to strain applied thereto during the press forming. Accordingly, the technology described in Patent Documents 3 and 4 is intended to control a material flow during press forming and not intended to reduce the influence of a shape variation of a blank, differently from the present invention.

The present invention has been accomplished in order to solve such a problem. An object of the present invention is to reduce the influence of a shape variation of a blank on dimensional accuracy of a press-formed article manufactured by performing press forming on the blank, the blank being extracted from a metal sheet having a shape variation.

### Solution to Problem

In order to achieve the object, one aspect of the present invention relates to a press-formed article manufacturing method for manufacturing a press-formed article by performing press forming with use of a press die on a blank extracted from a metal sheet having a shape variation, and the press-formed article manufacturing method includes: a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article; a first actual blank press-formed article shape acquisition step of acquiring a press-formed article shape after die release as a first actual blank press-formed article shape by generating a first actual blank model based on measurement data acquired by measuring a first actual blank extracted from the metal sheet having the shape variation, and performing press forming analysis to perform press forming with use of the generated first actual blank model by the predetermined die model; a first actual deviation amount acquisition step of finding a deviation portion where the reference press-formed article shape and the first actual blank press-formed article shape deviate from each other, and a first actual deviation amount as a deviation amount in the deviation portion, by comparing the reference press-formed article shape with the first actual blank press-formed article shape; a second actual blank press-formed article shape acquisition step of acquiring a press-formed article shape after die release as a second actual blank press-formed article shape by generating a second actual blank model of at least one type based on measurement data acquired by measuring a second actual blank extracted from a portion of the metal sheet having the shape variation which portion is different from a portion from which the first actual blank is extracted, and performing press forming analysis to perform press forming with use of the generated second actual blank model by the predetermined die model; a second actual deviation amount acquisition step of finding a deviation portion where the reference press-formed article shape and the second actual blank press-formed article shape of the at least one type deviate from each other, and a second actual deviation amount as a deviation amount in the deviation portion, by comparing the reference press-formed article shape with the second actual blank press-formed article shape of the at least one type; a measures-required portion specifying step of specifying, as measures-required portions, respective portions of the press-formed article which portions correspond to a portion having a deviation amount exceeding a predetermined threshold as the first actual deviation amount and a portion having a deviation amount exceeding the predetermined threshold as the second actual deviation amount; and a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.

### Advantageous Effects of Invention

In the aspect of the present invention, a portion of a press-formed article which portion is largely influenced by a shape variation of a blank is specified in consideration of differences in shape variation between individual blanks. Then, by taking measures suitable for this portion, it is possible to reduce the influence of the shape variation of the blank.

By this, with the aspect of the present invention, it is possible to manufacture a press-formed article with an excellent dimensional accuracy, and even with use of blanks extracted from a metal sheet having a shape variation, it is possible to manufacture press-formed articles with an excellent dimensional accuracy at a good yield.

### Brief Description of Drawings

FIG. 1 is an explanatory drawing of each step of a press-formed article manufacturing method according to a first embodiment.
FIG. 2 is an outside drawing of a target component in the first embodiment.
FIG. 3 is an explanatory drawing of a flat blank model.
FIG. 4 is a drawing illustrating a reference press-formed article shape subjected to press-forming (drawing) analysis with use of the flat blank model in FIG. 3 and a change amount from a forming bottom dead center at each portion in the reference press-formed article shape.
FIG. 5 is an explanatory drawing of a first actual blank model according to the first embodiment.
FIG. 6 is a drawing illustrating a first actual blank press-formed article shape acquired by press-forming (drawing) analysis with use of the first actual blank model in FIG. 5 and a change amount from the forming bottom dead center at each portion in the first actual blank press-formed article shape.
FIG. 7 is a drawing illustrating first actual deviation amounts found in comparison between the reference press-formed article shape in FIG. 4 and the first actual blank press-formed article shape in FIG. 6.
FIG. 8 is an explanatory drawing of a second actual blank model according to the first embodiment.
FIG. 9 is a drawing illustrating a second actual blank press-formed article shape acquired by press-forming (drawing) analysis with use of the second actual blank model in FIG. 8 and a change amount from the forming bottom dead center at each portion in the second actual blank press-formed article shape.
FIG. 10 is a drawing illustrating second actual deviation amounts found in comparison between the reference press-formed article shape in FIG. 4 and the second actual blank press-formed article shape in FIG. 9.
FIG. 11 is a drawing illustrating ranges indicative of the first actual deviation amounts in FIG. 7 and the second actual deviation amounts in FIG. 10 in such a manner as to correspond to a target shape.
FIG. 12 is a drawing illustrating a reference press-formed article shape acquired by press-forming (drawing) analysis with use of a die model provided with beads and a change amount from the forming bottom dead center at each portion in the reference press-formed article shape.
FIG. 13 is a drawing illustrating a first actual blank press-formed article shape acquired by press-forming (drawing) analysis with use of a die model provided with beads and a change amount from the forming bottom dead center at each portion in the first actual blank press-formed article shape.
FIG. 14 is a drawing illustrating first actual deviation amounts found in comparison between the reference press-formed article shape in FIG. 12 and the first actual blank press-formed article shape in FIG. 13.
FIG. 15 is a drawing illustrating a second actual blank press-formed article shape acquired by press-forming (drawing) analysis with use of a die model provided with beads and a change amount from the forming bottom dead center at each portion in the second actual blank press-formed article shape.
FIG. 16 is a drawing illustrating second actual deviation amounts found in comparison between the reference press-formed article shape in FIG. 12 and the second actual blank press-formed article shape in FIG. 15.
FIG. 17 is a drawing illustrating ranges indicative of the first actual deviation amounts in FIG. 14 and the second actual deviation amounts in FIG. 16 in such a manner as to correspond to a target shape.
FIG. 18 is a drawing illustrating a reference press-formed article shape acquired by press-forming (stamping) analysis with use of the flat blank model in FIG. 3 and a change amount from the forming bottom dead center at each portion in the reference press-formed article shape.
FIG. 19 is a drawing illustrating a first actual blank press-formed article shape acquired by press-forming (stamping) analysis with use of the first actual blank model in FIG. 5 and a change amount from the forming bottom dead center at each portion in the first actual blank press-formed article shape.
FIG. 20 is a drawing illustrating first actual deviation amounts found in comparison between the reference press-formed article shape in FIG. 18 and the first actual blank press-formed article shape in FIG. 19.
FIG. 21 is an explanatory drawing of a second actual blank model according to an example.
FIG. 22 is a drawing illustrating a second actual blank press-formed article shape acquired by press-forming (stamping) analysis with use of the second actual blank model in FIG. 21 and a change amount from the forming bottom dead center at each portion in the second actual blank press-formed article shape.
FIG. 23 is a drawing illustrating second actual deviation amounts found in comparison between the reference press-formed article shape in FIG. 18 and the second actual blank press-formed article shape in FIG. 22.
FIG. 24 is a drawing illustrating ranges indicative of the first actual deviation amounts in FIG. 20 and the second actual deviation amounts in FIG. 23 in such a manner as to correspond to a target shape.
FIG. 25 is a drawing illustrating a reference press-formed article shape acquired by press-forming (stamping) analysis with use of a die model provided with beads and a change amount from the forming bottom dead center at each portion in the reference press-formed article shape.
FIG. 26 is a drawing illustrating a first actual blank press-formed article shape acquired by press-forming (stamping) analysis with use of the die model provided with beads and a change amount from the forming bottom dead center at each portion in the first actual blank press-formed article shape.
FIG. 27 is a drawing illustrating first actual deviation amounts found in comparison between the reference press-formed article shape in FIG. 25 and the first actual blank press-formed article shape in FIG. 26.
FIG. 28 is a drawing illustrating a second actual blank press-formed article shape acquired by press-forming (stamping) analysis with use of the die model provided with beads and a change amount from the forming bottom dead center at each portion in the second actual blank press-formed article shape.
FIG. 29 is a drawing illustrating second actual deviation amounts found in comparison between the reference press-formed article shape in FIG. 25 and the second actual blank press-formed article shape in FIG. 28.
FIG. 30 is a drawing illustrating ranges indicative of the first actual deviation amounts in FIG. 27 and the second actual deviation amounts in FIG. 29 in such a manner as to correspond to a target shape.
FIG. 31 is an explanatory drawing of each step of a press-formed article manufacturing method according to a second embodiment.
FIG. 32 is an example of an outside drawing of a target shape in the second embodiment.
FIG. 33 is an explanatory drawing of a flat blank model according to the second embodiment.
FIG. 34 is a drawing illustrating a reference press-formed article shape acquired by press forming analysis with use of the flat blank model in FIG. 33 and a change amount from a forming bottom dead center.
FIG. 35 is an explanatory drawing of the first actual blank model.
FIG. 36 is a drawing illustrating a first actual blank press-formed article shape acquired by press forming analysis with use of the first actual blank model in FIG. 35 and change amounts from the forming bottom dead center.
FIG. 37 is a drawing illustrating deviation amounts found in comparison between the reference press-formed article shape in FIG. 34 and the first actual blank press-formed article shape in FIG. 36.
FIG. 38 is an explanatory drawing of the second actual blank model.
FIG. 39 is a drawing illustrating a second actual blank press-formed article shape acquired by press forming analysis with use of the second actual blank model in FIG. 38 and change amounts from the forming bottom dead center.
FIG. 40 is a drawing illustrating deviation amounts found in comparison between the reference press-formed article shape in FIG. 34 and the second actual blank press-formed article shape in FIG. 39.
FIG. 41 is a drawing illustrating ranges indicative of the deviation amounts in FIG. 37 and in FIG. 40 in such a manner as to correspond to a target shape.
FIG. 42 is a drawing illustrating a blank model provided with beads at portions corresponding to measures-required portions specified in FIG. 41.
FIG. 43 is a drawing illustrating a bead-provided reference press-formed article shape acquired by press forming analysis after beads are provided for the flat blank model in FIG. 33, and change amounts from the forming bottom dead center.
FIG. 44 is a drawing illustrating a bead-provided first actual blank press-formed article shape acquired by press forming analysis after beads are provided for the first actual blank model in FIG. 35, and change amounts from the forming bottom dead center.
FIG. 45 is a drawing to describe deviation amounts found in comparison between the bead-provided reference press-formed article shape in FIG. 43 and the bead-provided first actual blank press-formed article shape in FIG. 44.
FIG. 46 is a drawing illustrating a bead-provided second actual blank press-formed article shape acquired by press forming analysis after beads are provided for the second actual blank model in FIG. 38, and change amounts from the forming bottom dead center.
FIG. 47 is a drawing to describe deviation amounts found in comparison between the bead-provided reference press-formed article shape in FIG. 43 and the bead-provided second actual blank press-formed article shape in FIG. 46.
FIG. 48 is a drawing illustrating ranges indicative of the deviation amounts in FIG. 45 and in FIG. 47 in such a manner as to correspond to a target shape.

### Description of Embodiments

Next will be described embodiments of the present invention with reference to the drawings.

### [First Embodiment]

A press-formed article manufacturing method according to the present embodiment uses a blank extracted from a metal sheet having a shape variation (recesses and protrusions). In the present embodiment, a press-formed article is manufactured by performing press forming such as stamping or drawing on such a blank by a press die corresponding to a target press-formed article shape. In the present invention, at the time of manufacturing a press-formed article, the influence of the shape variation of the blank on a press-formed article to be manufactured is reduced so as to manufacture a press-formed articles with a higher dimensional accuracy.

Here, the shape variation of a metal sheet indicates, for example, a shape variation in which recesses and protrusions are consecutively formed in a predetermined direction.

A material for a target metal sheet may be a steel material, aluminum alloy, or the like but is not limited to them. The present invention provides a technology suitable for a high-strength steel sheet having a tensile strength of 980 MPa or more, and particularly, a super high-strength steel sheet having a tensile strength of 1470 MPa or more. In a case where the tensile strength of a metal sheet is high, a shape variation of the metal sheet or a blank largely influences dimensional accuracy in comparison with a case where the tensile strength is low.

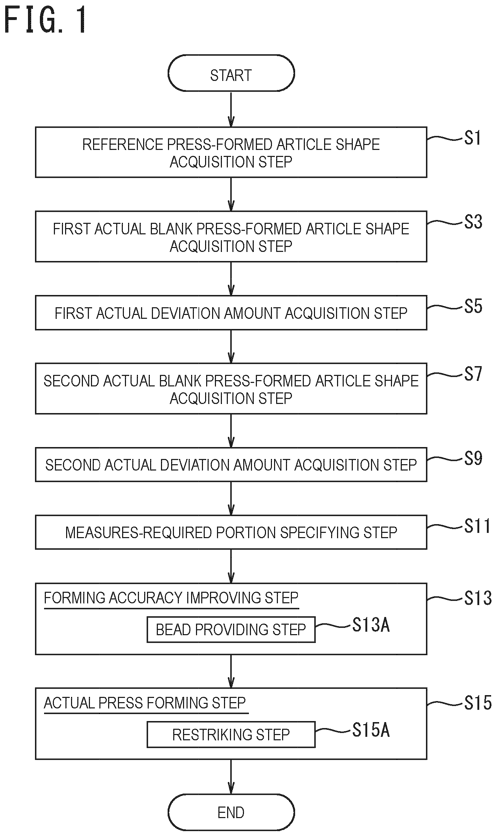

As illustrated in FIG. 1, the press-formed article manufacturing method according to the present embodiment includes a reference press-formed article shape acquisition step S1, a first actual blank press-formed article shape acquisition step S3, a first actual deviation amount acquisition step S5, a second actual blank press-formed article shape acquisition step S7, a second actual deviation amount acquisition step S9, a measures-required portion specifying step S11, a forming accuracy improving step S13, and an actual press forming step S15.

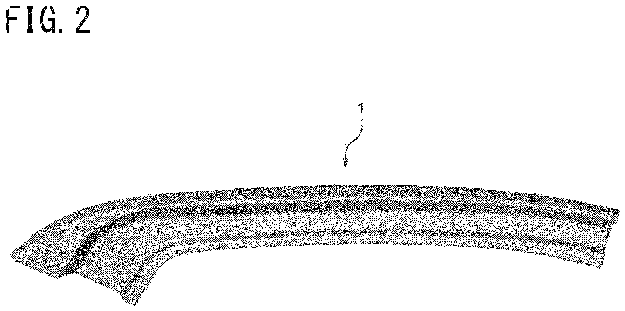

The following describes details of each configuration with reference to a case where press forming is performed with a press-formed article 1 illustrated in FIG. 2 being taken as a target shape. Note that the present embodiment deals with a case where a blank made of a 1.5 GPa-grade steel sheet having a board thickness of 1.2 mm is used. However, the present invention is not limited to this.

### <Reference Press-formed Article Shape Acquisition Step>

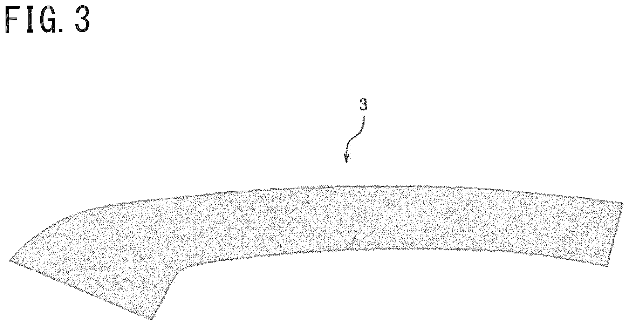

The reference press-formed article shape acquisition step S1 uses a flat blank model 3 as illustrated in FIG. 3. This step is a step of acquiring a press-formed article shape after die release as a reference press-formed article shape by performing press forming analysis by a predetermined die model.

The predetermined die model is set based on a forming-surface shape of an actual die used for press forming on a flat blank into a target press-formed article shape. For example, a die model having a shape corresponding to the target press-formed article shape is taken as the predetermined die model. However, a die model corrected just by the amount of spring back after die release is preferable as the predetermined die model.

Note that the "press forming analysis" in this description includes analysis to acquire a shape at a forming bottom dead center, and analysis to acquire a shape after die release, namely, after spring back.

In the related art, the flat blank model 3 is a blank model which is generally used for press forming analysis and which has a flat shape without any protrusion and recess.

The press forming analysis is generally performed by CAE analysis such as a finite element method (FEM). That is, the press forming analysis should be performed by structural analysis using a computer, e.g., well-known CAE analysis or the like. Press forming includes stamping, drawing, and the like, but the present invention is applicable to any press forming. The present embodiment deals with a case of drawing.

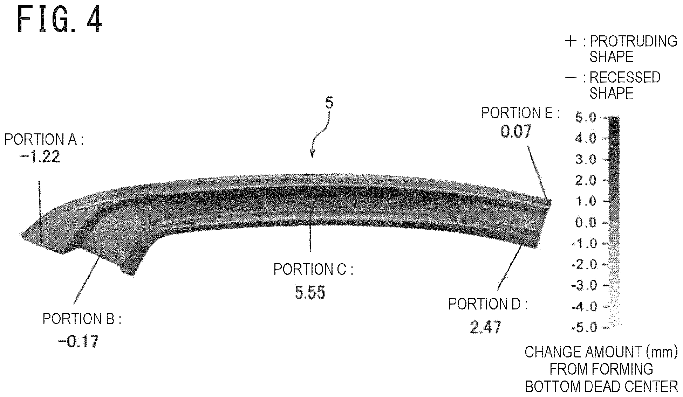

A reference press-formed article shape 5 after die release, which is acquired by the press forming analysis, is illustrated in FIG. 4**.** In FIG. 4, change amounts due to die release from the forming bottom dead center are illustrated with light and shade.

A change amount is a value acquired by subtracting, from a height, in a press forming direction, of each portion of a press-formed article shape after die release and spring back after press forming, a height of its corresponding portion of the shape at the forming bottom dead center. On this account, the change amount is a value corresponding to a spring back amount in the press forming direction. In a case where a height difference (a change amount) is positive (+), the shape after die release is a protruding shape relative to a forming bottom dead center shape. In the meantime, in a case where a height difference (a change amount) is negative (-), the shape after die release is a recessed shape relative to the forming bottom dead center shape.

In FIG. 4, a portion having a recessed shape relative to the forming bottom dead center is illustrated with light color, and a portion having a protruding shape is illustrated with dark color. A positive (+) number in FIG. 4 is a change amount to a protruding direction (toward the near side on the plane of paper), a negative (-) number is a change amount to a recessed direction (toward the deep side on the plane of paper), and they are indicated in a unit of mm. This also applies to numbers or the like in the following other drawings.

In the present example, the following change amounts were found as illustrated in FIG. 4. That is, a left end portion (a portion A) of the reference press-formed article shape 5 had a change amount of -1.22 mm. A left end (a portion B) of a top portion had a change amount of -0.17 mm, a longitudinally central portion (a portion C) had a change amount of 5.55 mm, a right end (a portion D) of a lower flange portion had a change amount of 2.47 mm, and a right end portion (a portion E) had a change amount of 0.07 mm.

### <First Actual Blank Press-formed Article Shape Acquisition Step>

The first actual blank press-formed article shape acquisition step S3 uses a blank model corresponding to a shape variation of a metal sheet. This step is a step of acquiring a press-formed article shape after die release by performing the same press forming analysis as in the reference press-formed article shape acquisition step S1.

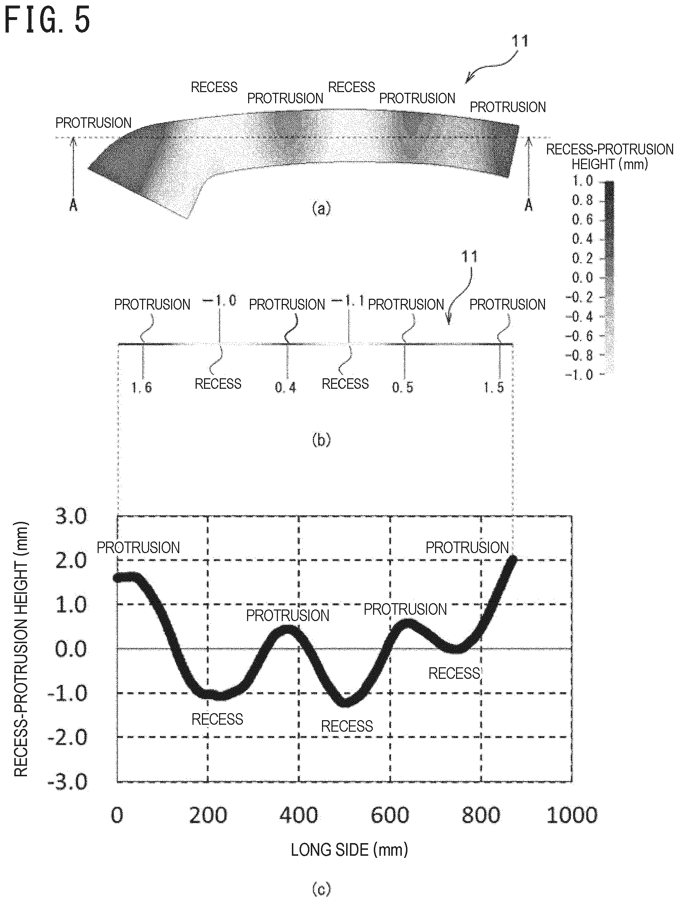

In the first actual blank press-formed article shape acquisition step S3, first, a first actual blank model 11 in a shape corresponding to the shape variation of the metal sheet is generated based on the shape variation of the metal sheet. An example of the first actual blank model 11 is illustrated in FIG. 5 and is described below more specifically.

The first actual blank model 11 is a blank model generated based on measurement data acquired by measuring the shape of an actual blank (a first actual blank) extracted from a predetermined position of the metal sheet having the shape variation. More specifically, the shape of the first actual blank is measured by a three-dimensional shape measuring apparatus or the like including a laser range finder, for example, and the first actual blank model 11 is generated based on the measurement result.

FIG. 5(a) is a drawing illustrating the first actual blank model 11 in a plan view. FIG. 5(b) is a sectional view taken along a line A-A in FIG. 5(a), and light and shade in color in FIG. 5B express recesses and protrusions. FIG. 5(c) illustrates a graph indicative of respective heights of the recesses and the protrusions in FIG. 5(b).

As illustrated in FIG. 5, the first actual blank model 11 is a blank model having a shape variation similar to that of the first actual blank extracted from the metal sheet having the shape variation and has an irregular recessed-protruding shape.

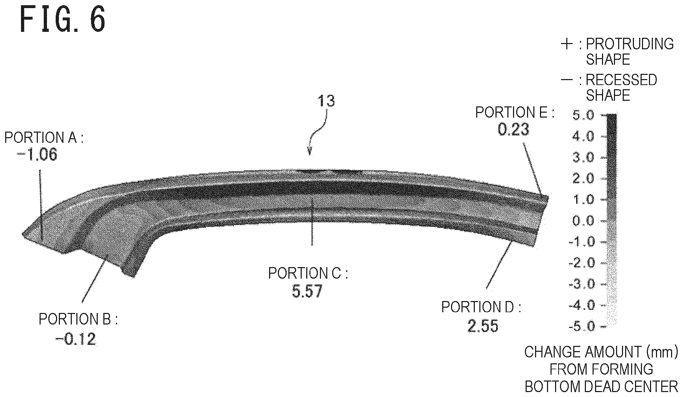

Subsequently, with use of the first actual blank model 11, press forming analysis to perform press forming by the same predetermined die model as in the reference press-formed article shape acquisition step S1 is performed. Then, based on the analysis result, a press-formed article shape after die release is acquired as a first actual blank press-formed article shape 13. FIG. 6 illustrates the first actual blank press-formed article shape 13 acquired by the press forming analysis. Colors and values illustrated in FIG. 6 have the same meanings as those in FIG. 4.

As illustrated in FIG. 6, in the first actual blank press-formed article shape 13, the left end portion (the portion A) had a change amount of -1.06 mm. The left end (the portion B) of the top portion had a change amount of -0.12 mm, the longitudinally central portion (the portion C) had a change amount of 5.57 mm, the right end (the portion D) of the lower flange portion had a change amount of 2.55 mm, and the right end portion (the portion E) had a change amount of 0.23 mm.

### <First Actual Deviation Amount Acquisition Step>

In the first actual deviation amount acquisition step S5, the reference press-formed article shape 5 (FIG. 4) is compared with the first actual blank press-formed article shape 13 (FIG. 6). This step is a step of finding a deviation portion where those shapes deviate from each other, and a deviation amount (a first actual deviation amount) in the deviation portion.

For example, a plurality of regions is set in the shape of a press-formed article, and respective representative points in the regions are taken as portions where a deviation amount is found. As the regions, a region estimated to easily have spring back after die release may be set representatively, for example. In addition, data of a set of the deviation portion and the first actual deviation amount may be stored, for example.

In the present embodiment, a press-formed article shape at the forming bottom dead center is regarded as a reference shape, and a change amount (a spring back amount) from the reference shape is found at each portion of a press-formed article shape after die release. Then, a difference between respective change amounts in two press-formed article shapes is found as a deviation amount.

That is, the first actual deviation amount found in the first actual deviation amount acquisition step S5 is a value acquired by subtracting the change amount (FIG. 4) of the reference press-formed article shape 5 from the change amount (FIG. 6) of the first actual blank press-formed article shape 13. The change amount (FIG. 6) of the first actual blank press-formed article shape 13 is a change amount acquired by use of an actual blank having a shape variation. The change amount (FIG. 4) of the reference press-formed article shape 5 is a change amount acquired by use of a flat blank model. Accordingly, in a case where the first actual deviation amount is positive (+), its corresponding portion in the first actual blank press-formed article shape 13 has a shape protruding relative to the reference press-formed article shape 5. In the meantime, in a case where the first actual deviation amount is negative (-), its corresponding portion in the first actual blank press-formed article shape 13 has a shape recessed relative to the reference press-formed article shape 5.

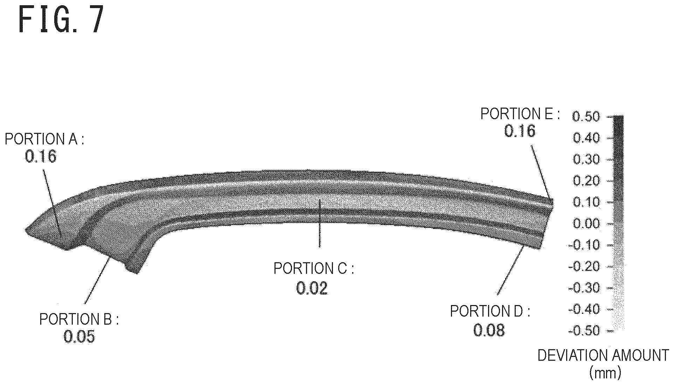

The first actual deviation amounts found as described above are illustrated in FIG. 7.

As illustrated in FIG. 7, the following values were found as the first actual deviation amounts between the first actual blank press-formed article shape 13 and the reference press-formed article shape 5. That is, the first actual deviation amount in the portion A was 0.16 mm, the first actual deviation amount in the portion B was 0.05 mm, the first actual deviation amount in the portion C was 0.02 mm, the first actual deviation amount in the portion D was 0.08 mm, and the first actual deviation amount in the portion E was 0.16 mm.

### <Second Actual Blank Press-formed Article Shape Acquisition Step>

The second actual blank press-formed article shape acquisition step S7 uses an actual blank model different from the first actual blank model 11. This step is a step of acquiring a press-formed article shape after die release by performing the same press forming analysis as in the reference press-formed article shape acquisition step S1.

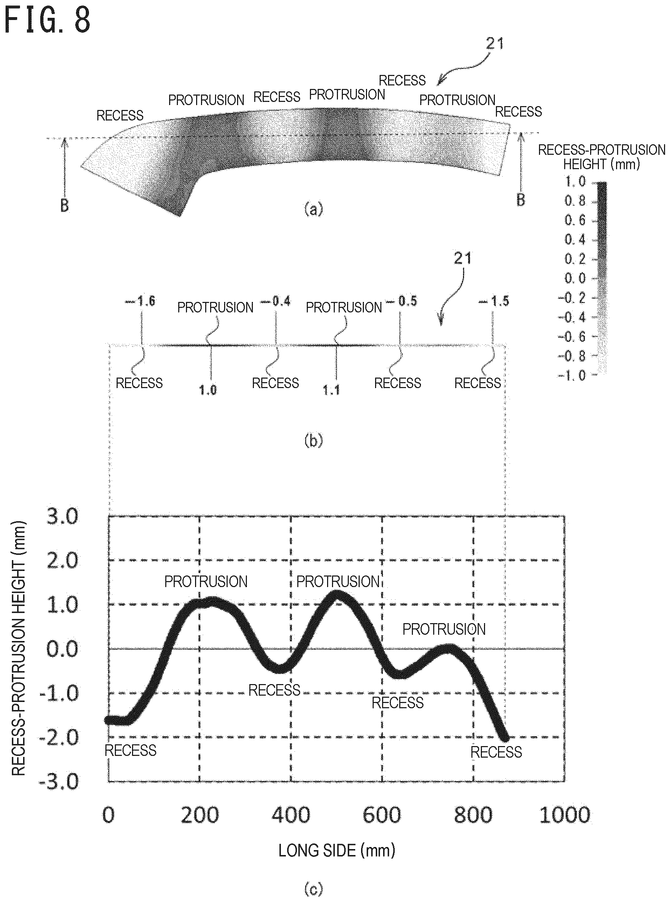

In the second actual blank press-formed article shape acquisition step S7, first, a second actual blank model 21 is generated with use of an actual blank different from the first actual blank. An example of the second actual blank model 21 is illustrated in FIG. 8 and is described below more specifically.

The second actual blank model 21 is a blank model generated based on measurement data acquired by measuring the shape of an actual blank (a second actual blank) extracted from a portion of the metal sheet having the shape variation which portion is different from the portion from which the first actual blank is extracted. Similarly to the first actual blank model 11, the shape of the second actual blank is measured by a three-dimensional shape measuring apparatus or the like including a laser range finder, for example, and the second actual blank model 21 is generated based on the measurement result.

FIG. 8(a) is a drawing illustrating the second actual blank model 21 in a plan view. FIG. 8(b) is a sectional view taken along a line B-B in FIG. 8(a), and light and shade in color in FIG. 8(b) express recesses and protrusions. FIG. 8(c) illustrates a graph indicative of respective heights of the recesses and the protrusions in FIG. 8(b).

As illustrated in FIG. 8, the second actual blank model 21 is a blank model having a shape variation similar to that of the second actual blank extracted from the metal sheet having the shape variation. The second actual blank model 21 has an irregular recessed-protruding shape different from the first actual blank model 11.

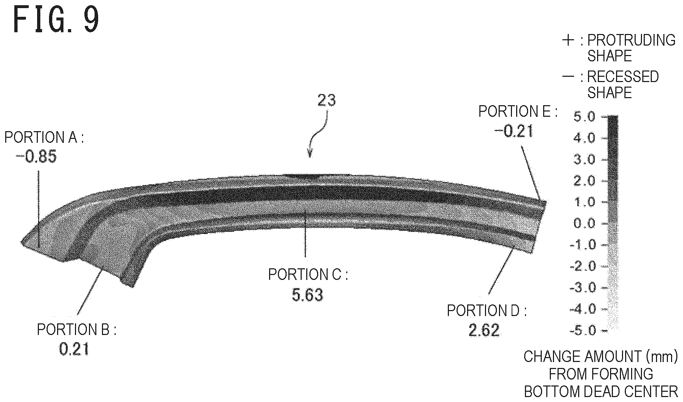

Subsequently, with use of the second actual blank model 21, press forming analysis to perform press forming by the same predetermined die model as in the reference press-formed article shape acquisition step S1 is performed. A press-formed article shape after die release is acquired as a second actual blank press-formed article shape 23. FIG. 9 illustrates the second actual blank press-formed article shape 23. Colors and values illustrated in FIG. 9 have the same meanings as those in FIGs. 4 and 6.

In this example, the following change amounts were found as illustrated in FIG. 9. That is, in the second actual blank press-formed article shape 23, the portion A had a change amount of -0.85 mm. The portion B had a change amount of 0.21 mm, the portion C had a change amount of 5.63 mm, the portion D had a change amount of 2.62 mm, and the portion E had a change amount of -0.21 mm.

### <Second Actual Deviation Amount Acquisition Step>

The second actual deviation amount acquisition step S9 is a step of comparing the reference press-formed article shape 5 with the second actual blank press-formed article shape 23 to find a deviation portion where those shapes deviate from each other, and a deviation amount (a second actual deviation amount) in the deviation portion. A method for finding the second actual deviation amount is similar to the method described in the first actual deviation amount acquisition step S5, and therefore, is not described herein.

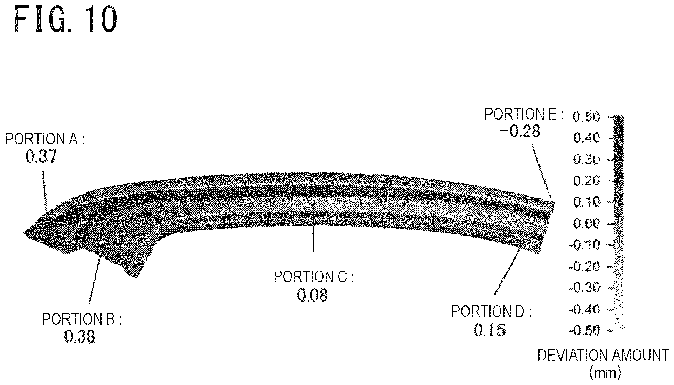

FIG. 10 illustrates second actual deviation amounts found in comparison between the reference press-formed article shape 5 (FIG. 4) and the second actual blank press-formed article shape 23 (FIG. 9).

As illustrated in FIG. 10, the following values were found as the second actual deviation amounts between the second actual blank press-formed article shape 23 and the reference press-formed article shape 5. That is, the second actual deviation amount in the portion A was 0.37 mm, the second actual deviation amount in the portion B was 0.38 mm, the second actual deviation amount in the portion C was 0.08 mm, the second actual deviation amount in the portion D was 0.15 mm, and the second actual deviation amount in the portion E was -0.28 mm.

### <Measures-required Portion Specifying Step>

The measures-required portion specifying step S11 is a step of specifying, as measures-required portions, portions of the press-formed article 1 which portions correspond to a portion having a first actual deviation amount exceeding a threshold in the first actual deviation amount acquisition step S5 and a portion having a second actual deviation amount exceeding the threshold in the second actual deviation amount acquisition step S9.

For example, in a case where a plurality of press-formed articles is put on top of each other and joined to each other to assemble members of a vehicle body, when the press-formed articles have a large deviation in shape (particularly, a flange portion), it is difficult to join the press-formed articles to each other. In this case, it may be necessary to take measures. In view of this, in the present embodiment, a portion to be largely influenced by a shape variation of a blank, that is, a portion assumed to have a large deviation is specified as a measures-required portion. Hereby, measures to reduce the influence of the shape variation of the blank are taken.

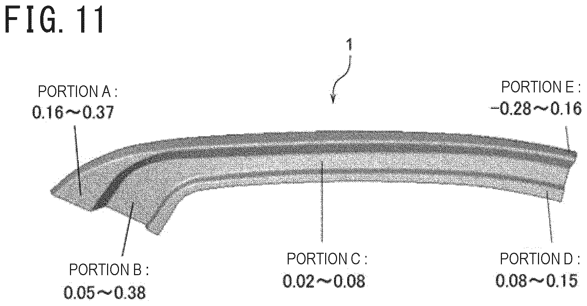

FIG. 11 illustrates both the first actual deviation amounts (see FIG. 7) found in the first actual deviation amount acquisition step S5 and the second actual deviation amounts (see FIG. 10) found in the second actual deviation amount acquisition step S9 in such a manner as to correspond to the target shape.

As illustrated in FIG. 11, the first actual deviation amounts and the second actual deviation amounts were as follows. That is, the first actual deviation amount and the second actual deviation amount in the portion A were from 0.16 mm to 0.37 mm, the first actual deviation amount and the second actual deviation amount in the portion B were from 0.05 mm to 0.38 mm, the first actual deviation amount and the second actual deviation amount in the portion C were from 0.02 mm to 0.08 mm, the first actual deviation amount and the second actual deviation amount in the portion D were from 0.08 mm to 0.15 mm, and the first actual deviation amount and the second actual deviation amount in the portion E were from -0.28 mm to 0.16 mm.

In FIG. 11, a minimum range including the first actual deviation amount and the second actual deviation amount in each portion is illustrated as a range of a deviation amount that can be caused in each portion. In the present example, one second actual deviation amount is found for each portion. However, in a case where two or more second actual deviation amounts are found, a minimum range including one first actual deviation amount and two or more second actual deviation amounts in each portion may be set as a range of a deviation amount estimated to be caused in each portion.

For example, in a case where the threshold in the measures-required portion specifying step S11 is ±0.15 mm, a portion having a deviation amount exceeding the threshold is the portion A, the portion B, the portion D, and the portion E. The portions A, B, D, E are specified as measures-required portions.

In the present embodiment, as measures to reduce the influence of the shape variation of the blank, a process of providing beads for portions of an actual die surface which portions correspond to the measures-required portions is performed. The measures to reduce the influence of the shape variation of the blank correspond to the forming accuracy improving step S13. Then, press forming is performed with use of the actual die provided with the beads.

### <Forming Accuracy Improving Step S13>

In the forming accuracy improving step S13, a correction process is performed to reduce the deviation amount in the measures-required portion specified in the measures-required portion specifying step S11. That is, a process of correcting a shape of at least either one selected from a forming surface of an actual die as a press die to be used in the manufacture of a press-formed article and an actual blank as a blank to be used in the manufacture of a press-formed article is performed.

In the forming accuracy improving step in the present embodiment, in order to reduce the influence of the shape variation of the blank, the forming surface of the actual die to be used for press forming is corrected.

Accordingly, the forming accuracy improving step S13 in the present embodiment includes a bead providing step S13A.

The bead providing step S13A is a step of providing the actual die with the beads described above. The bead is provided for a portion of on an actual die surface which portion is to form a measures-required portion, or a measures-required portion and its peripheral portion.

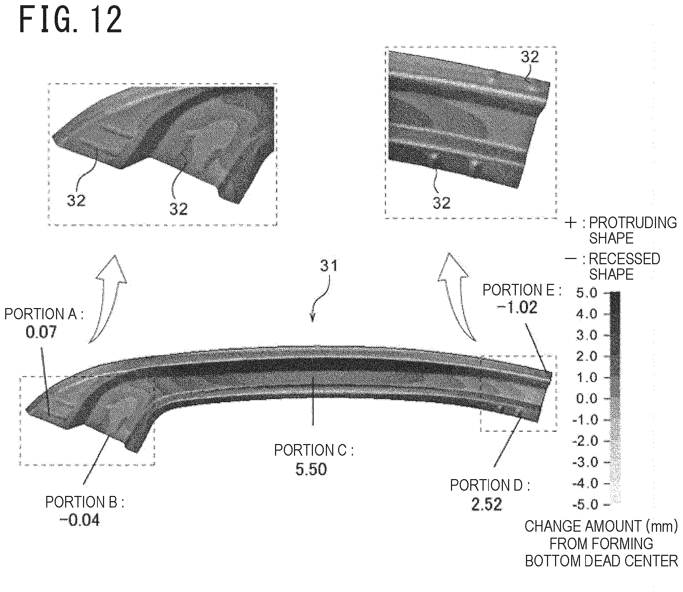

Note that, at the time when a bead mark 32 is formed in the press-formed article, the bead should be provided for the actual die such that the bead mark 32 formed in the portion B, the portion D, or the portion E in FIGS. 12 to 16 is formed. The bead should be also provided for the actual die such that the longitudinal direction of the bead mark 32 is along a direction intersecting with an end side of the press-formed article. Alternatively, like the bead mark 32 formed in the portion A in FIGS. 12 to 16, the bead may be provided for the actual die such that the longitudinal direction of the bead mark 32 is along a direction parallel to the end side of the press-formed article. When such a bead mark 32 is formed, it is possible to improve the rigidity of an end portion of the press-formed article, to hold down actual corrugations (shape variation) remaining in the press-formed article from an actual blank before press forming, and to further improve dimensional accuracy.

In the bead providing step S13A, the bead should be provided for the actual die such that the longitudinal direction of the bead mark 32 is along a direction intersecting with an end side of the press-formed article 1 which end side is closest to a corresponding measures-required portion. Note that, in a case where the bead cannot be set on the end side closest to the measures-required portion for component design reasons or the like, the bead is set in a vicinal area where the bead can be set, e.g.**,** the vicinity of the measures-required portion or the like.

In a case where press forming is performed on a blank having a shape variation in which recesses and protrusions are consecutive like the present embodiment, the bead may be provided for the actual die such that the longitudinal direction of the bead mark 32 is along a direction where the recesses and the protrusions of the shape variation are consecutive in a corresponding measures-required portion or its vicinal portion. When the bead is provided for the actual die as such, the shape variation (actual corrugations) of the blank can be held down by the bead of the actual die, around the forming bottom dead center in press forming. As a result, the press-formed article can be acquired with the shape variation being held down, thereby making it possible to improve dimensional accuracy.

In the bead providing step S13A, the bead should be provided for the actual die in the following manner. That is, the bead should be provided for the actual die such that the longitudinal direction of the bead mark is along a direction where the recesses and the protrusions in the shape variation of the blank are consecutive, in the measures-required portion or its vicinal portion of the press-formed article. Here, it is preferable that the bead be provided such that the longitudinal direction of the bead mark is along the direction where the recesses and the protrusions in the shape variation of the blank are consecutive, in the measures-required portion of the press-formed article. However, in a case where the bead cannot be provided for the measures-required portion for component design reasons or the like, the bead may be provided such that the longitudinal direction of the bead mark is along the direction where the recesses and the protrusions in the shape variation of the blank are consecutive, in a vicinal portion around the measures-required portion of the press-formed article, for example.

The bead mark to be formed in the measures-required portion may have a protruding shape or a recessed shape. The length, width, or height of the bead mark should be determined appropriately to correspond to an allowable degree from a shape required for a target press-formed article in consideration of an acceptable height or pitch of actual corrugations (shape variation) remaining in the press-formed article.

The shape of the bead mark can be a circular shape, an oval shape, an elliptical shape, a square shape, a rectangular shape, a triangular shape, a diamond shape, or the like in a top view. Furthermore, a mountain shape, a trapezoidal shape, a semicircular shape, a semielliptical shape, or the like is also applicable in a side view.

Here, the shape of the bead mark has a shape similar to a bead shape to be provided for the actual die.

### <Actual Press Forming Step>

The actual press forming step S15 is a step of performing press forming on an actual blank with use of the actual die provided with the beads in the bead providing step S13A.

### <Verification of Effect of Bead Formation>

An effect obtained when press forming was performed with use of the actual die provided with the beads was verified by press forming analysis. Details of the verification will be described below.

Herein, beads were provided for respective portions corresponding to measures-required portions, in the predetermined die model used for the above press forming analysis. With use of the die model based on the actual die provided with the beads (hereinafter referred to as a "bead-provided die model"), analysis was performed in a similar manner to the reference press-formed article shape acquisition step S1 to the second actual deviation amount acquisition step S9. Note that change amounts and deviation amounts described in the following description were found in the same manner as those illustrated in FIGS. 4 to 11.

FIG. 12 illustrates a reference press-formed article shape 31 acquired by performing press forming analysis on the flat blank model 3 (see FIG. 3) with use of the bead-provided die model.

As illustrated in FIG. 12, bead shapes on the bead-provided die model were transferred to the reference press-formed article shape 31, so that bead marks 32 were formed. As illustrated in an enlarged view in FIG. 12, a bead was provided for a portion of the die model which portion corresponded to the portion A. More specifically, a bead was provided such that the longitudinal direction of the bead mark 32 transferred to the press-formed article shape was parallel to a left end side of the press-formed article shape.

Further, a bead was provided for a portion of the die model which portion corresponded to each of the portion B, the portion D, and the portion E such that the longitudinal direction of its corresponding bead mark 32 was along a direction intersecting with an end side of the press-formed article shape which end side was closest to the portion provided with the bead.

As illustrated in FIG. 12, the following change amounts were found. That is, in a case where press forming analysis was performed with use of the bead-provided die model, the portion A of the reference press-formed article shape 31 had a change amount of 0.07 mm. The portion B had a change amount of -0.04 mm, the portion C had a change amount of 5.50 mm, the portion D had a change amount of 2.52 mm, and the portion E had a change amount of -1.02 mm.

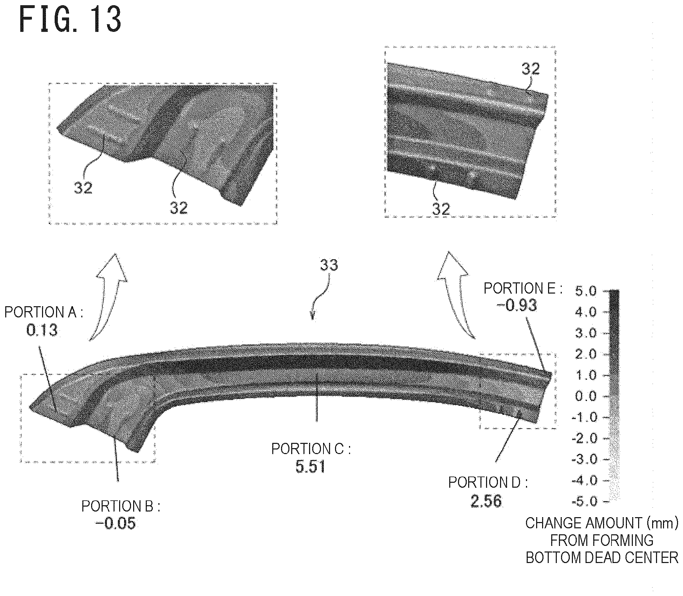

Subsequently, FIG. 13 illustrates a first actual blank press-formed article shape 33 acquired by performing press forming analysis on the first actual blank model 11 (see FIG. 5) with use of the bead-provided die model.

As illustrated in FIG. 13, the following change amounts were found. That is, the portion A of the first actual blank press-formed article shape 33 had a change amount of 0.13 mm. The portion B had a change amount of -0.05 mm, the portion C had a change amount of 5.51 mm, the portion D had a change amount of 2.56 mm, and the portion E had a change amount of -0.93 mm.

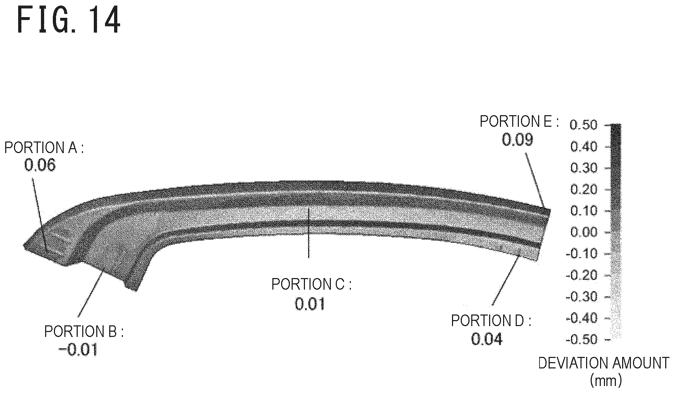

FIG. 14 illustrates first actual deviation amounts found in comparison between the reference press-formed article shape 31 (FIG. 12) and the first actual blank press-formed article shape 33 (FIG. 13).

As illustrated in FIG. 14, in a case where press forming analysis was performed with use of the bead-provided die model, the following first actual deviation amounts were found between the reference press-formed article shape 31 and the first actual blank press-formed article shape 33. That is, the first actual deviation amount in the portion A was 0.06 mm, the first actual deviation amount in the portion B was -0.01 mm, the first actual deviation amount in the portion C was 0.01 mm, the first actual deviation amount in the portion D was 0.04 mm, and the first actual deviation amount in the portion E was 0.09 mm.

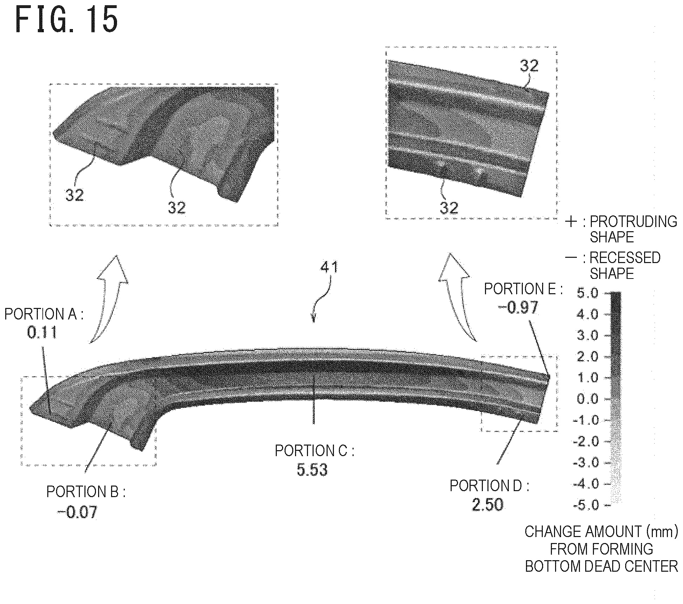

Subsequently, FIG. 15 illustrates a second actual blank press-formed article shape 41 acquired by performing press forming analysis on the second actual blank model 21 (see FIG. 8) with use of the bead-provided die model.

As illustrated in FIG. 15, the following change amounts were found. That is, the portion A of the second actual blank press-formed article shape 41 had a change amount of 0.11 mm. The portion B had a change amount of -0.07 mm, the portion C had a change amount of 5.53 mm, the portion D had a change amount of 2.50 mm, and the portion E had a change amount of -0.97 mm.

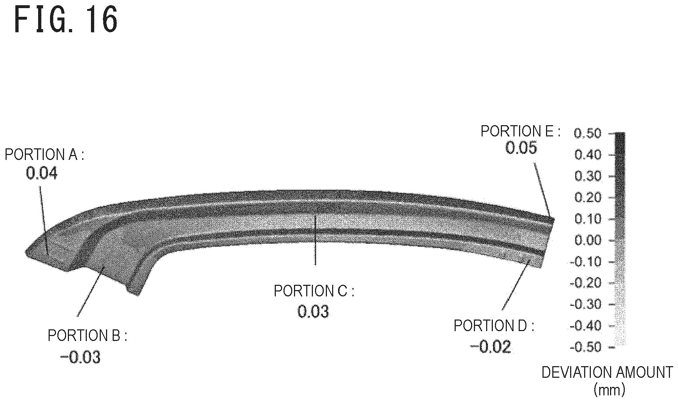

FIG. 16 illustrates second actual deviation amounts found in comparison between the reference press-formed article shape 31 (FIG. 12) and the second actual blank press-formed article shape 41 (FIG. 15).

As illustrated in FIG. 16, the following second actual deviation amounts were found between the reference press-formed article shape 31 and the second actual blank press-formed article shape 41. That is, the second actual deviation amount in the portion A was 0.04 mm, the second actual deviation amount in the portion B was -0.03 mm, the second actual deviation amount in the portion C was 0.03 mm, the second actual deviation amount in the portion D was -0.02 mm, and the second actual deviation amount in the portion E was 0.05 mm.

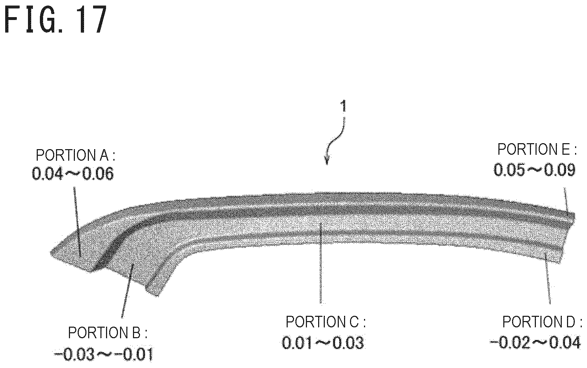

FIG. 17 illustrates both the first actual deviation amounts in FIG. 14 and the second actual deviation amounts in FIG. 16 in such a manner as to correspond to the target shape.

As illustrated in FIG. 17, the first actual deviation amounts and the actual second deviation amounts were found as follows. That is, the first actual deviation amount and the second actual deviation amount in the portion A was from 0.04 mm to 0.06 mm, the first actual deviation amount and the second actual deviation amount in the portion B was from -0.03 mm to -0.01 mm, the first actual deviation amount and the second actual deviation amount in the portion C was from 0.01 mm to 0.03 mm, the first actual deviation amount and the second actual deviation amount in the portion D was from -0.02 mm to 0.04 mm, and the first actual deviation amount and the second actual deviation amount in the portion E was from 0.05 mm to 0.09 mm.

The deviation amounts in FIG. 17 are markedly reduced in comparison with the deviation amounts before measures are taken as illustrated in FIG. 11. More specifically, the deviation amounts after measures were taken were in a range of less than ±0.15 mm as the threshold in the measures-required portion specifying step S11 in each portion.

Accordingly, it can be verified that the providing of beads for a die in such a manner as to correspond to measures-required portions specified in the measures-required portion specifying step S11 is effective in reducing the influence of the shape variation of the blank.

As such, in a case where press forming is performed on an actual blank having a shape variation with use of a corrected actual die provided with beads, the shape of a press-formed article provided after press forming has a result similar to an analysis result in FIG. 17. That is, the influence of the shape variation of the blank is reduced, and an excellent dimensional accuracy is achieved.

In the above present embodiment, it is possible to specify a portion largely influenced by a shape variation of a blank and to take appropriate measures. Accordingly, it is possible to stably acquire a press-formed article with an excellent dimensional accuracy.

It is noted that, in the present embodiment, a plurality of patterns of blank models for a blank having a shape variation is generated, and measures-required portions are specified by finding deviation amounts in each of the patterns. Accordingly, the present embodiment is achieved in consideration of differences in shape variation between individual actual blanks.

Further, in the above description, a second actual blank model of only one type is generated, but second actual blank models of several types may be generated. In that case, a plurality of second actual blanks is extracted from different portions of a metal sheet having a shape variation to generate the second actual blank models of the several types.

When the number of blank model patterns for an actual blank having a shape variation is increased, differences in shape variation between individual actual blanks can be more specifically considered.

Further, in the above description, in terms of a deviation amount between two press-formed article shapes, a difference therebetween in the change amount (the spring back amount) from the forming bottom dead center in the press forming direction is taken as the deviation amount. However, the present invention is not limited to this.

For example, in the press forming direction, a height of each portion in one of the press-formed article shapes after die release (after spring back) is acquired. The deviation amount may be a difference acquired by subtracting, from the height of each portion, a height of its corresponding portion in the other one of the press-formed article shapes after die release (after spring back).

In this case, it is necessary to set a common fixed point in the two press-formed article shapes, and the deviation amount may fluctuate depending on how to select the fixed point.

In this respect, when change amounts based on the shape at the forming bottom dead center, which is constant regardless of a press-formed article shape, are compared with each other like the present embodiment, the deviation amount can be accurately and easily found, and this is preferable.

The actual press forming step S15 may further include the following restriking step S15A at the time when press forming is performed with use of a corrected actual die. That is, the actual press forming step S15 may further include the restriking step S15A of repressing a press-formed article to which the bead marks 32 are transferred from the actual die provided with the beads, in such a manner as to crush the bead marks 32. By crushing the bead marks 32 in the restriking step, portions provided with the bead marks 32 and their peripheral portions receive strain and harden due to the strain, thereby further improving the rigidity of the press-formed article. Besides, it is possible to hold down actual corrugations (shape variation) remaining in the press-formed article from the actual blank before press forming and to further improve dimensional accuracy.

It is noted that, in a case where the bead marks 32 are not desired to remain after press forming, the beads marks 32 may be also crushed and straightened in the restriking step.

Further, in the present invention, it is not necessary to form a clear bead mark on the press-formed article. For example, in a case where the height of a bead provided for the actual die is low, a clear bead mark may not be transferred to the press-formed article. However, even in this case, press forming can be performed while the bead on the actual die is holding down the shape variation of the blank, so that it is possible to reduce the influence of the shape variation of the blank.

### Examples

In order to verify the effect of the first embodiment, the press-formed article manufacturing method described in FIG. 1 was performed. In the present example, the press-formed article 1 in FIG. 2 is a target shape, similarly to the above embodiment. The forming in the press forming analysis is stamping in the present example, whereas the forming is drawing in the above embodiment. Further, change amounts and deviation amounts in the present example were found by a method similar to that in the above embodiment.

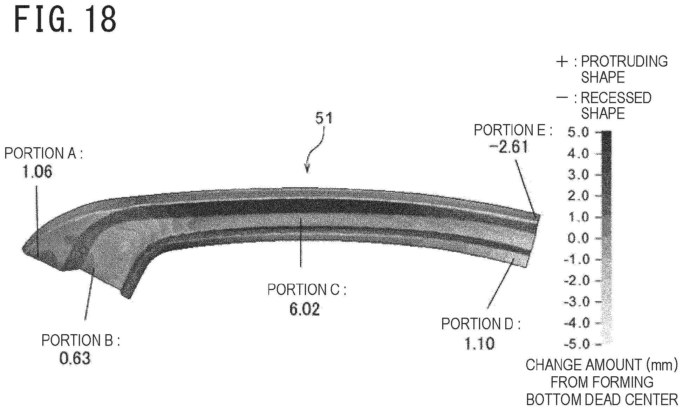

First, in the reference press-formed article shape acquisition step S1, press forming analysis was performed on the flat blank model 3 (see FIG. 3) with use of a predetermined die model. A press-formed article shape after die release was acquired as a reference press-formed article shape 51. This is illustrated in FIG. 18.

As illustrated in FIG. 18, in a case where press forming analysis was performed with use of the predetermined die model, the portion A of the reference press-formed article shape 51 had a change amount of 1.06 mm. The portion B had a change amount of 0.63 mm, the portion C had a change amount of 6.02 mm, the portion D had a change amount of 1.10 mm, and the portion E had a change amount of -2.61 mm.

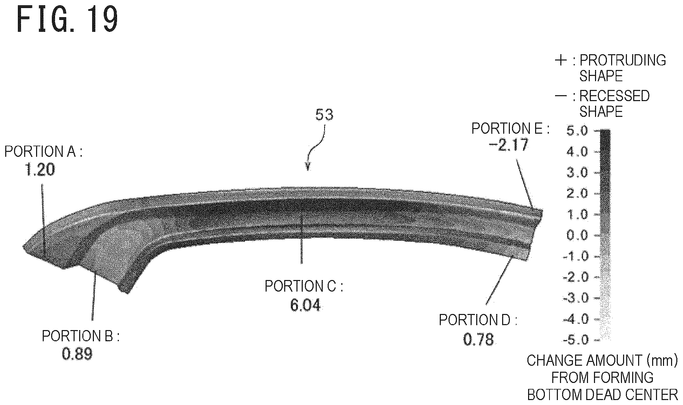

Subsequently, in the first actual blank press-formed article shape acquisition step S3, press forming analysis was performed on the first actual blank model 11 in FIG. 5 with use of a predetermined die model similar to the above. A first actual blank press-formed article shape 53 as a press-formed article shape after die release is illustrated in FIG. 19.

As illustrated in FIG. 19, in a case where press forming analysis was performed with use of the predetermined die model, the portion A of the first actual blank press-formed article shape 53 had a change amount of 1.20 mm. The portion B had a change amount of 0.89 mm, the portion C had a change amount of 6.04 mm, the portion D had a change amount of 0.78 mm, and the portion E had a change amount of -2.17 mm.

Further, in the first actual deviation amount acquisition step S5, the reference press-formed article shape 51 (FIG. 18) was compared with the first actual blank press-formed article shape 53 (FIG. 19). Then, deviation amounts (first actual deviation amounts) between those shapes were found.

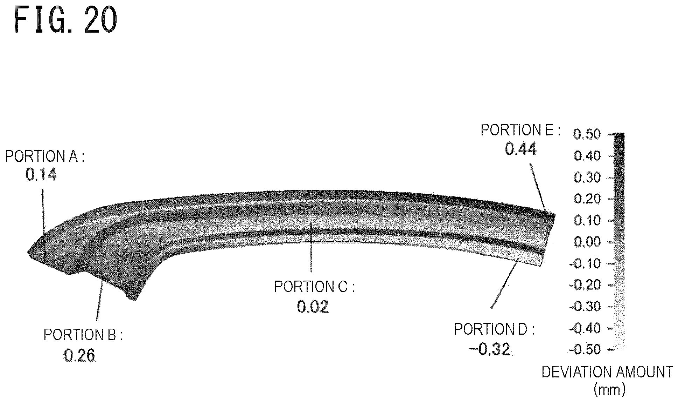

As illustrated in FIG. 20, the following first actual deviation amounts were found between the first actual blank press-formed article shape 53 and the reference press-formed article shape 51. That is, the first actual deviation amount in the portion A was 0.14 mm, the first actual deviation amount in the portion B was 0.26 mm, the first actual deviation amount in the portion C was 0.02 mm, the first actual deviation amount in the portion D was -0.32 mm, and the first actual deviation amount in the portion E was 0.44 mm.

Subsequently, in the second actual blank press-formed article shape acquisition step S7, an actual blank model different from the first actual blank model 11 was generated. Then, press forming analysis was performed thereon with use of a predetermined die model similar to the above, and a press-formed article shape after die release was acquired.

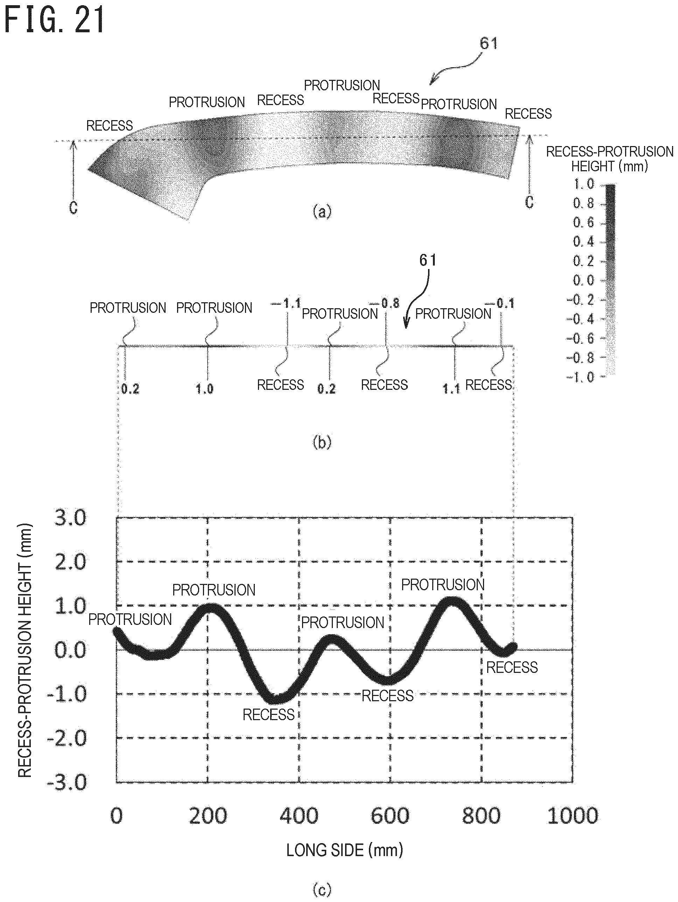

As the actual blank model different from the first actual blank model 11, the second actual blank model 21 described in FIG. 8 is used in the above embodiment. However, a second actual blank model 61 illustrated in FIG. 21 was used in the present example.

The second actual blank model 61 is a blank model generated based on measurement data acquired by measuring the shape of an actual blank extracted from a portion of the metal sheet having the shape variation which portion is different from respective portions from which the first actual blank and the second actual blank in the above embodiment are extracted.

Similarly to the first actual blank model 11, the shape of the above actual blank is measured by a three-dimensional shape measuring apparatus or the like including a laser range finder, for example, and the second actual blank model 61 is generated based on the measurement result.

FIG. 21(a) is a drawing illustrating the second actual blank model 61 in a plan view. FIG. 21(b) is a sectional view taken along a line C-C in FIG. 21(a), and light and shade in color in FIG. 21(b) express recesses and protrusions. FIG. 21(c) illustrates a graph indicative of respective heights of the recesses and the protrusions in FIG. 21(b).

The second actual blank model 61 is a blank model having a shape variation similar to that of the actual blank extracted from the metal sheet having the shape variation. As illustrated in FIG. 21, the second actual blank model 61 has an irregular recessed-protruding shape different from the first actual blank model 11 and the second actual blank model 21 in the above embodiment.

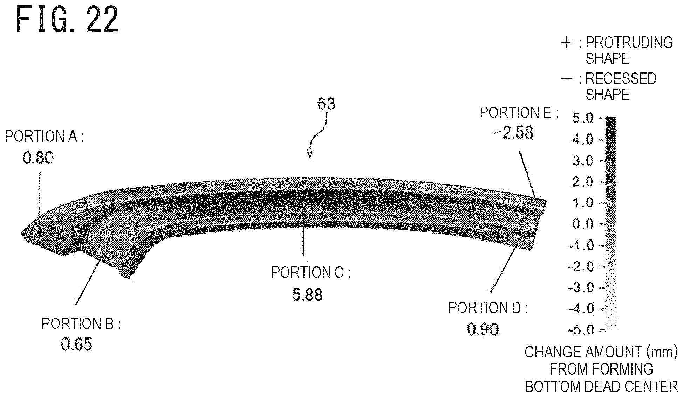

FIG. 22 illustrates a second actual blank press-formed article shape 63 acquired by performing press forming analysis on the second actual blank model 61 in FIG. 21 with use of the predetermined die model.

As illustrated in FIG. 22, in a case where press forming analysis was performed with use of the predetermined die model, the portion A of the second actual blank press-formed article shape 63 had a change amount of 0.80 mm. The portion B had a change amount of 0.65 mm, the portion C had a change amount of 5.88 mm, the portion D had a change amount of 0.90 mm, and the portion E had a change amount of -2.58 mm.

Further, in the second actual deviation amount acquisition step S9, the reference press-formed article shape 51 (FIG. 18) was compared with the second actual blank press-formed article shape 63 (FIG. 22). Then, deviation amounts (second actual deviation amounts) were found.

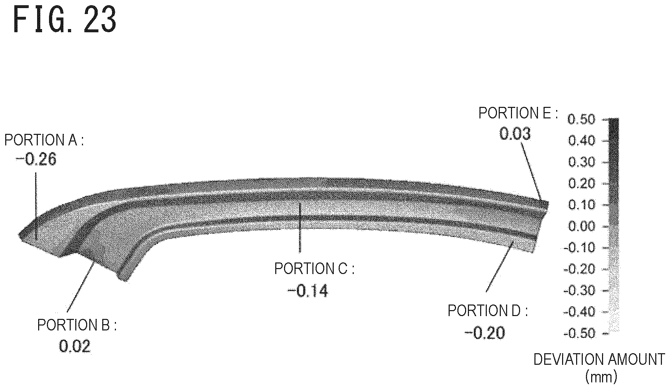

As illustrated in FIG. 23, the following second actual deviation amounts were found between the second actual blank press-formed article shape 63 and the reference press-formed article shape 51. That is, the second actual deviation amount in the portion A was -0.26 mm, the second actual deviation amount in the portion B was 0.02 mm, the second actual deviation amount in the portion C was -0.14mm, the second actual deviation amount in the portion D was -0.20 mm, and the second actual deviation amount in the portion E was 0.03 mm.

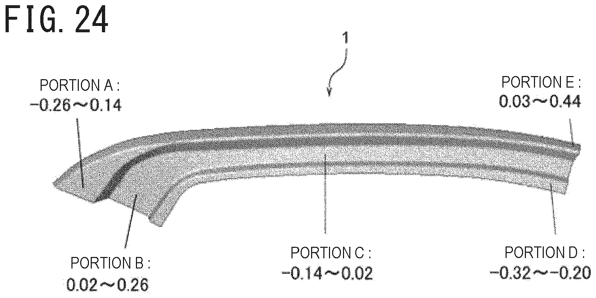

FIG. 24 illustrates both the first actual deviation amounts (FIG. 20) found in the first actual deviation amount acquisition step S5 and the second actual deviation amounts (FIG. 23) found in the second actual deviation amount acquisition step S9 in such a manner as to correspond to the target shape.

As illustrated in FIG. 24, the following deviation amounts were found before measures were taken.

That is, the deviation amount in the portion A was from -0.26 mm to 0.14 mm, the deviation amount in the portion B was from 0.02 mm to 0.26 mm, the deviation amount in the portion C was from -0.14 mm to 0.02 mm, the deviation amount in the portion D was from -0.32 mm to - 0.20 mm, and the deviation amount in the portion E was from 0.03 mm to 0.44 mm.

Here, for example, the threshold in the measures-required portion specifying step S11 is ±0.15 mm. In this case, a portion having a deviation amount exceeding the threshold is the portion A, the portion B, the portion D, and the portion E. Accordingly, these portions were specified as measures-required portions.

In the present example, as measures to reduce the influence of the shape variation of the blank, beads similar to those in the above embodiment were provided for respective surfaces of portions of an actual die which portions corresponded to the measures-required portions. In the present example, the effect of the beads was verified by press forming analysis. This will be described below.

Here, beads similar to those in the above embodiment were provided for a predetermined die model, and the die model (a bead-provided die model) was used. Analysis similar to the reference press-formed article shape acquisition step S1 to the second actual deviation amount acquisition step S9 was performed.

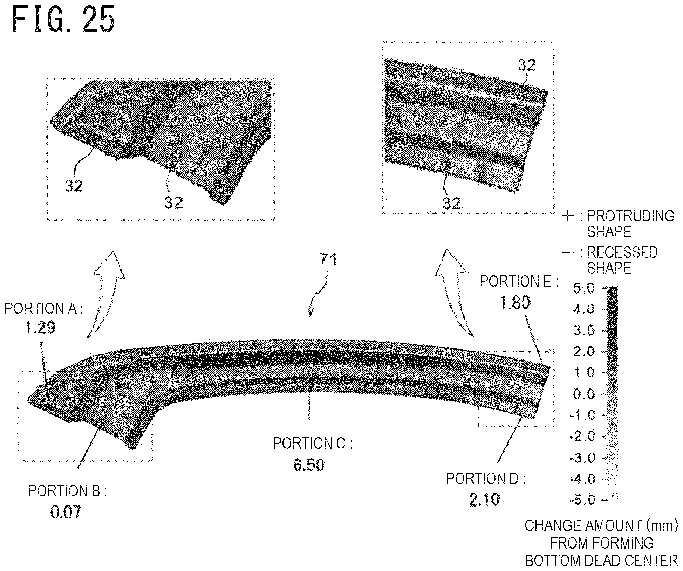

FIG. 25 illustrates a reference press-formed article shape 71 acquired by performing press forming analysis on the flat blank model 3 (see FIG. 3) with use of the bead-provided die model.

As illustrated in FIG. 25, in a case where the bead-provided die model was used, the portion A of the reference press-formed article shape 71 had a change amount of 1.29 mm. The portion B had a change amount of 0.07 mm, the portion C had a change amount of 6.50 mm, the portion D had a change amount of 2.10 mm, and the portion E had a change amount of 1.80 mm.

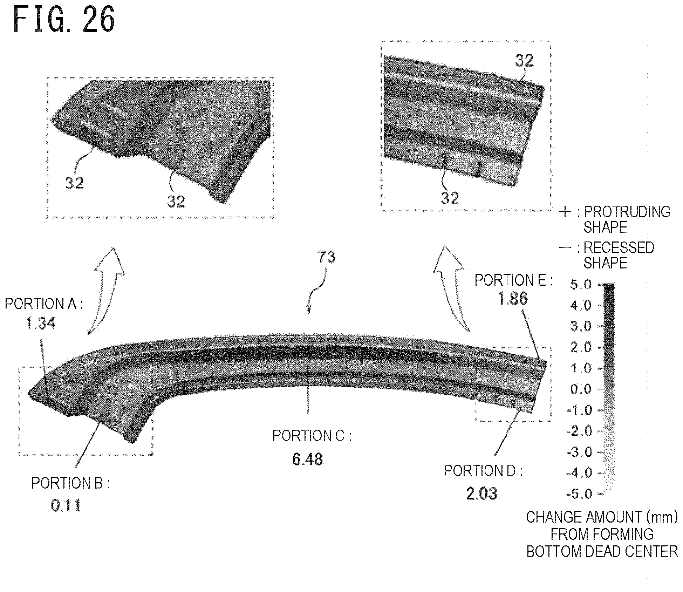

Subsequently, FIG. 26 illustrates a first actual blank press-formed article shape 73 acquired by performing press forming analysis on the first actual blank model 11 (see FIG. 5) with use of the bead-provided die model.

As illustrated in FIG. 26, in a case where the bead-provided die model was used, the portion A of the first actual blank press-formed article shape 73 had a change amount of -1.34 mm. The portion B had a change amount of 0.11 mm, the portion C had a change amount of 6.48 mm, the portion D had a change amount of 2.03 mm, and the portion E had a change amount of 1.86 mm.

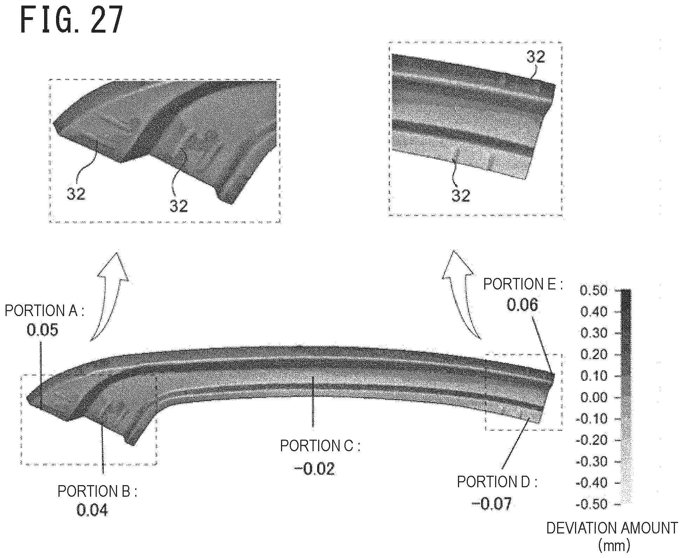

FIG. 27 illustrates first actual deviation amounts found in comparison between the reference press-formed article shape 71 (FIG. 25) and the first actual blank press-formed article shape 73 (FIG. 26).

As illustrated in FIG. 27, in a case where the bead-provided die model was used, the following first actual deviation amounts were found between the reference press-formed article shape 71 and the first actual blank press-formed article shape 73. That is, the first actual deviation amount in the portion A was 0.05 mm, the first actual deviation amount in the portion B was 0.04 mm, the first actual deviation amount in the portion C was -0.02 mm, the first actual deviation amount in the portion D was -0.07 mm, and the first actual deviation amount in the portion E was 0.06 mm.

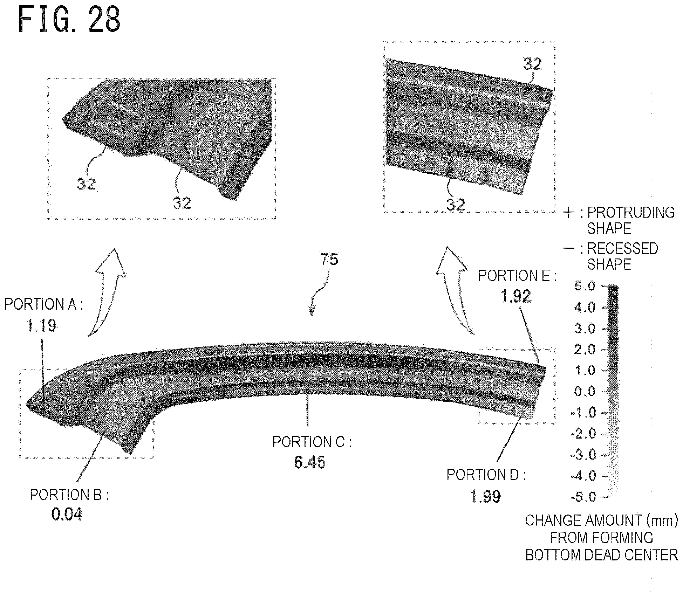

Subsequently, FIG. 28 illustrates a second actual blank press-formed article shape 75 acquired by performing press forming analysis on the second actual blank model 61 (see FIG. 21) with use of the bead-provided die model.

As illustrated in FIG. 28, in a case where the bead-provided die model was used, the portion A of the second actual blank press-formed article shape 75 had a change amount of 1.19 mm. The portion B had a change amount of 0.04 mm, the portion C had a change amount of 6.45 mm, the portion D had a change amount of 1.99 mm, and the portion E had a change amount of 1.92 mm.

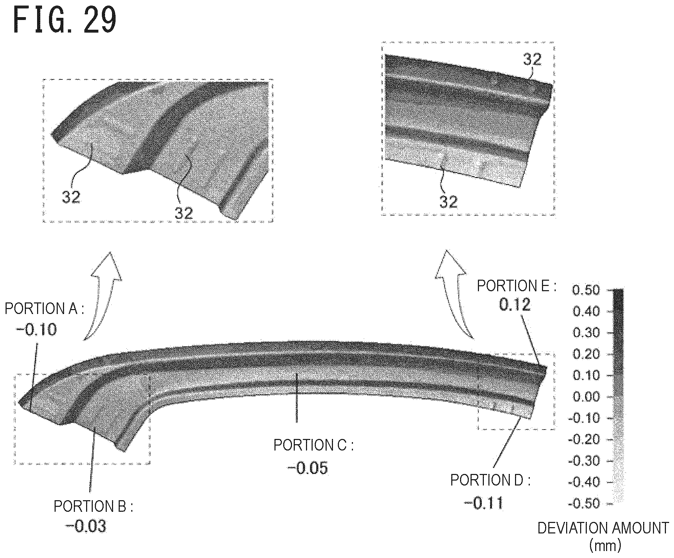

FIG. 29 illustrates second actual deviation amounts found in comparison between the reference press-formed article shape 71 (FIG. 25) and the second actual blank press-formed article shape 75 (FIG. 28).

As illustrated in FIG. 29, in a case where the bead-provided die model was used, the following second actual deviation amounts were found between the reference press-formed article shape 71 and the second actual blank press-formed article shape 75. That is, the second actual deviation amount in the portion A was -0.10 mm, the second actual deviation amount in the portion B was - 0.03 mm, the second actual deviation amount in the portion C was -0.05mm, the second actual deviation amount in the portion D was -0.11 mm, and the second actual deviation amount in the portion E was 0.12 mm.

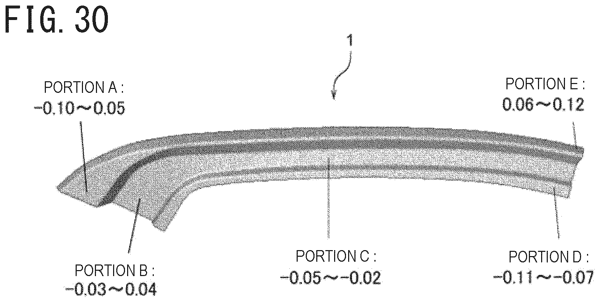

FIG. 30 illustrates the first actual deviation amounts in FIG. 27 and the second actual deviation amounts in FIG. 29 in such a manner as to correspond to the target shape.

As illustrated in FIG. 30, in a case where the bead-provided die model was used, the following deviation amounts were found. That is, the deviation amount in the portion A was from -0.10 mm to 0.05 mm, the deviation amount in the portion B was from -0.03 mm to 0.04 mm, the deviation amount in the portion C was from -0.05 mm to - 0.02 mm, the deviation amount in the portion D was from - 0.11 mm to -0.07 mm, and the deviation amount in the portion E was from 0.06 mm to 0.12 mm**.** The deviation amounts in FIG. 30 were markedly reduced in comparison with the deviation amounts before measures were taken as illustrated in FIG. 24, and they were in a range of less than ±0.15 mm as the threshold in the measures-required portion specifying step S11 in each portion. Accordingly, it can be verified that the providing of beads for portions of a die which portions correspond to measures-required portions is effective in reducing the influence of a shape variation of a blank even in the case of stamping.

In view of this, in the bead providing step S13A, beads similar to those in the bead-provided die model were provided for an actual die surface. More specifically, the beads were provided for portions of a die which portions were to form measures-required portions in the present example, or the measures-required portions and their peripheral portions.

Then, in the actual press forming step S15, press forming was performed on an actual blank having a shape variation with use of the actual die provided with the beads. Note that the actual blank used herein was a 1.5 GPa-grade steel sheet having a board thickness of 1.2 mm and corresponding to the above-mentioned blank model.

In the present example, the shape of a press-formed article acquired by press forming in the actual press forming step S15 was less influenced by the shape variation of the blank, and a press-formed article with an excellent dimensional accuracy was achieved, similarly to the analysis result in FIG. 30.

### [Second Embodiment]

Next will be described a second embodiment based on the present invention with reference to the drawings.

It is noted that, in the second embodiment, the same configuration or member as a configuration or member in the first embodiment will be described with use of the same reference sign as in the first embodiment.

A press-formed article manufacturing method according to the present embodiment uses a blank extracted from a metal sheet having a shape variation (recesses and protrusions). The press-formed article manufacturing method is a method to reduce the influence of the shape variation of the blank before press forming on the dimensional accuracy of a press-formed article at the time when press forming such as stamping or drawing is performed by a predetermined die.

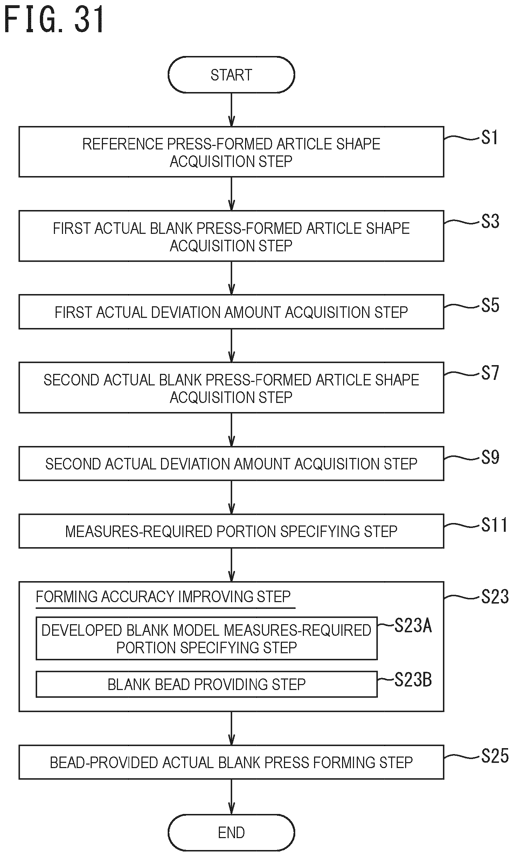

More specifically, as illustrated in FIG. 31, the press-formed article manufacturing method according to the present embodiment includes the reference press-formed article shape acquisition step S1, the first actual blank press-formed article shape acquisition step S3, the first actual deviation amount acquisition step S5, the second actual blank press-formed article shape acquisition step S7, the second actual deviation amount acquisition step S9, the measures-required portion specifying step S11, the forming accuracy improving step S13, and a bead-provided actual blank press forming step S25.

Respective configurations of the reference press-formed article shape acquisition step S1, the first actual blank press-formed article shape acquisition step S3, the first actual deviation amount acquisition step S5, the second actual blank press-formed article shape acquisition step S7, the second actual deviation amount acquisition step S9, and the measures-required portion specifying step S11 are similar to respective configurations of the steps described in the first embodiment.

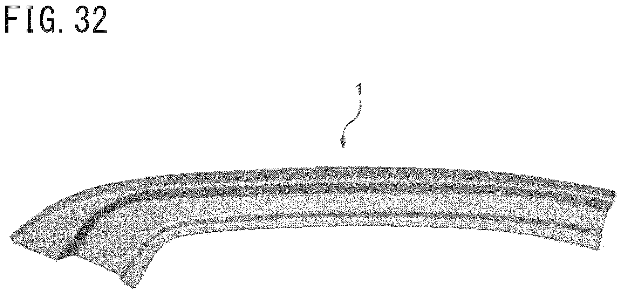

The present embodiment deals with a case where press forming is performed with the press-formed article 1 illustrated in FIG. 32 being taken as a target shape. The following describes each step more specifically. Note that the present embodiment deals with a case where a blank made of a 1.5 GPa-grade steel sheet having a board thickness of 1.2 mm and a blank model corresponding to this are used but is not limited to this.

### <Reference Press-formed Article Shape Acquisition Step>

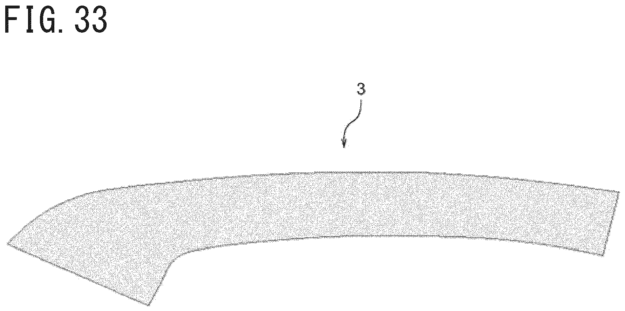

The reference press-formed article shape acquisition step S1 performs press forming analysis by a die model with use of the flat blank model 3 illustrated in FIG. 33. This step is a step of acquiring a press-formed article shape after die release as a flat blank press-formed article shape.

It is noted that the "press forming analysis" includes analysis to acquire a shape at a press forming bottom dead center, and analysis to acquire a shape after die release, namely, after spring back.

In the related art, the flat blank model 3 is a blank model which is generally used for press forming analysis and which has a flat shape without any recesses and protrusions.

The press forming analysis is generally performed by CAE analysis such as a finite element method (FEM). The press forming is not limited particularly and may be stamping, drawing, or the like. The present embodiment deals with a case where the press forming is stamping. Note that the die model used for press forming analysis is acquired by modeling a predetermined die to be used for actual press forming.

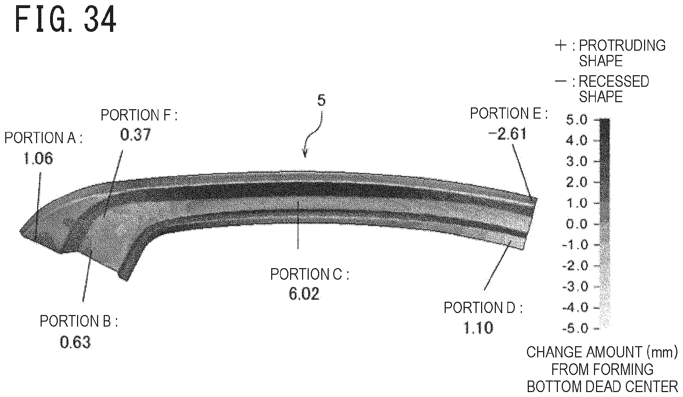

The reference press-formed article shape 5 after die release, acquired by press forming analysis, is illustrated in FIG. 34. In FIG. 34, a shape and change amounts from a forming bottom dead center are illustrated with light and shade in color.

A change amount is a value acquired by subtracting, from a height, in a press forming direction, of each portion of a press-formed article shape after die release and spring back after press forming, a height of its corresponding portion of a forming bottom dead center shape. This corresponds to a spring back amount in the press forming direction. In a case where a height difference (a change amount) is positive (+), the shape after die release is a protruding shape relative to the forming bottom dead center shape. In a case where the height difference (the change amount) is negative (-), the shape after die release is a recessed shape relative to the forming bottom dead center shape.

In FIG. 34, a portion having a recessed shape relative to the forming bottom dead center is illustrated with light color, and a portion having a protruding shape is illustrated with dark color. A positive (+) number in the drawing is a change amount to a protruding direction (toward the near side on the plane of paper), a negative (-) number is a change amount to a recessed direction (toward the deep side on the plane of paper), and they are indicated in a unit of mm.

Further, in this description, a left end portion of a shape after press forming analysis is defined as a portion A, a left end of a top portion thereof is defined as a portion B, a longitudinally central portion thereof is defined as a portion C, a right end of a lower flange portion thereof is defined as a portion D, a right end portion thereof is defined as a portion E, and a left top portion is defined as a portion F.

In the present example, change amounts found in the reference press-formed article shape 5 are as illustrated in FIG. 34. That is, the portion A had a change amount of 1.06 mm, the portion B had a change amount of 0.63 mm, the portion C had a change amount of 6.02 mm, the portion D had a change amount of 1.10 mm, the portion E had a change amount of -2.61 mm, and the portion F had a change amount of 0.37 mm.

### <First Actual Blank Press-formed Article Shape Acquisition Step>

The first actual blank press-formed article shape acquisition step S3 performs press forming analysis with use of a blank model corresponding to a shape variation of an actual blank. This step is a step of acquiring a press-formed article shape after die release.

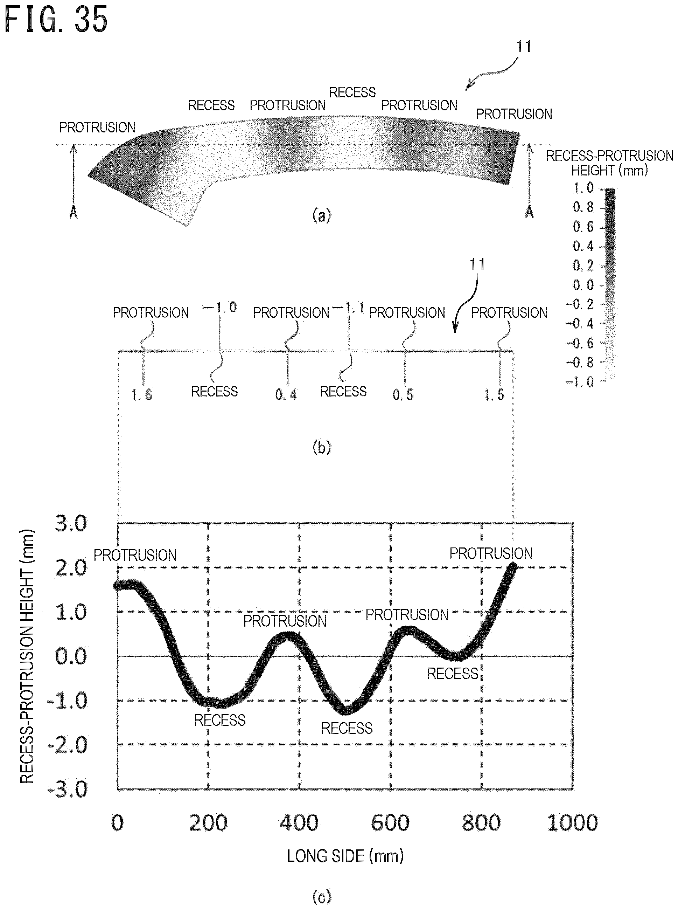

In the first actual blank press-formed article shape acquisition step S3, first, the first actual blank model 11 having a shape corresponding to the shape variation of the actual blank is generated. An example of the first actual blank model 11 is illustrated in FIG. 35 and is described below more specifically.

The first actual blank model 11 is a blank model generated based on measurement data acquired by measuring the shape of an actual blank (a first actual blank) extracted from a predetermined position of a metal sheet having a shape variation. More specifically, the shape of the first actual blank is measured by a three-dimensional shape measuring apparatus or the like including a laser range finder, for example, and the first actual blank model 11 is generated based on the measurement result.

FIG. 35A is a drawing illustrating the first actual blank model 11 in a plan view, and FIG. 35B is a sectional view taken along a line A-A in FIG. 35A. Light and shade in color in FIGS. 35A, 35B express recesses and protrusions. Note that a portion with dark color has a shape protruding toward the near side on the plane of paper, and a portion with light color has a shape recessed toward the deep side on the plane of paper. FIG. 35C illustrates a graph indicative of respective heights of the recesses and the protrusions in FIG. 35B.

As illustrated in FIG. 35, the first actual blank model 11 is a blank model having a shape variation similar to that of the first actual blank extracted from the metal sheet having the shape variation and has an irregular recessed-protruding shape.

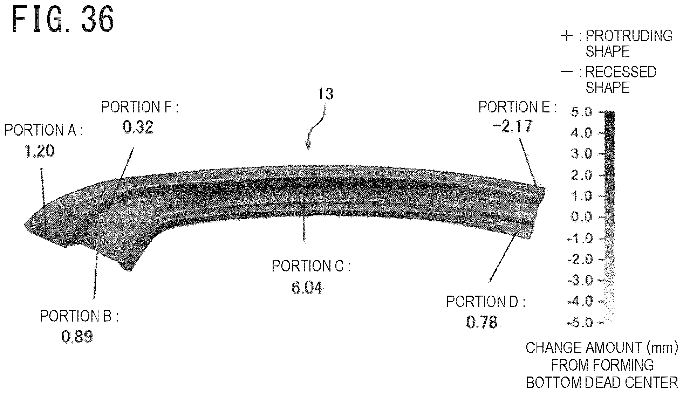

Subsequently, with use of the first actual blank model 11, press forming analysis is performed by the same die model as in the reference press-formed article shape acquisition step S1. A press-formed article shape after die release is acquired as the first actual blank press-formed article shape 13. FIG. 36 illustrates the first actual blank press-formed article shape 13 acquired by performing press forming analysis on the first actual blank model 11. Colors and values illustrated in FIG. 36 have the same meanings as those in FIG. 34.

In the present example, as illustrated in FIG. 36, the following change amounts were found in the first actual blank press-formed article shape 13. That is, the portion A had a change amount of 1.20 mm, the portion B had a change amount of 0.89 mm, the portion C had a change amount of 6.04 mm, the portion D had a change amount of 0.78 mm, the portion E had a change amount of - 2.17 mm, and the portion F had a change amount of 0.32 mm.

### <First Actual Deviation Amount Acquisition Step>

In the first actual deviation amount acquisition step S5, the reference press-formed article shape 5 (FIG. 34) is compared with the first actual blank press-formed article shape 13 (FIG. 36). This step is a step of finding a deviation portion where those shapes deviate from each other, and a deviation amount in the deviation portion.

In the present embodiment, a press-formed article shape at the forming bottom dead center is regarded as a reference shape, and a change amount (a spring back amount) from the reference shape is found in each portion of a press-formed article shape after die release. Then, a difference between respective change amounts of two press-formed article shapes is found as a deviation amount.

That is, the deviation amount found in the first actual deviation amount acquisition step S5 is a value acquired by subtracting the change amount (FIG. 34) in the reference press-formed article shape 5 from the change amount (FIG. 36) in the first actual blank press-formed article shape 13. Accordingly, in a case where the difference (the deviation amount) between the change amounts is positive (+), its corresponding portion in the first actual blank press-formed article shape 13 has a shape protruding relative to the reference press-formed article shape 5. In the meantime, in a case where the difference (the deviation amount) is negative (-), its corresponding portion in the first actual blank press-formed article shape 13 has a shape recessed relative to the reference press-formed article shape 5.

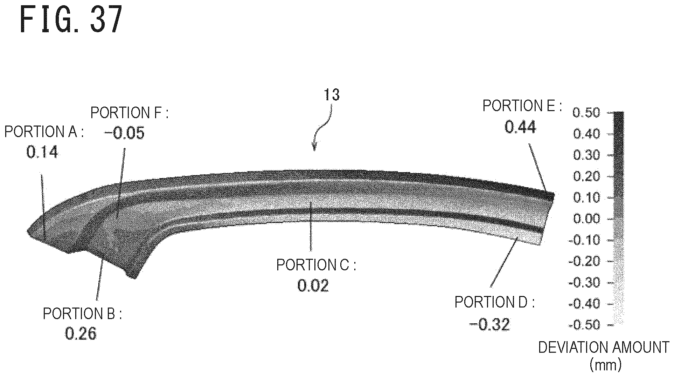

FIG. 37 illustrates the deviation amounts found as described above in such a manner as to correspond to the first actual blank press-formed article shape 13.

As illustrated in FIG. 37, the following deviation amounts were found between the first actual blank press-formed article shape 13 and the reference press-formed article shape 5. That is, the deviation amount in the portion A was 0.14 mm, the deviation amount in the portion B was 0.26 mm, the deviation amount in the portion C was 0.02 mm, the deviation amount in the portion D was -0.32 mm, the deviation amount in the portion E was 0.44 mm, and the deviation amount in the portion F was -0.05 mm.

### <Second Actual Blank Press-formed Article Shape Acquisition Step>

The second actual blank press-formed article shape acquisition step S7 performs press forming analysis with use of an actual blank model different from the first actual blank model 11. This step is a step of acquiring a press-formed article shape after die release.

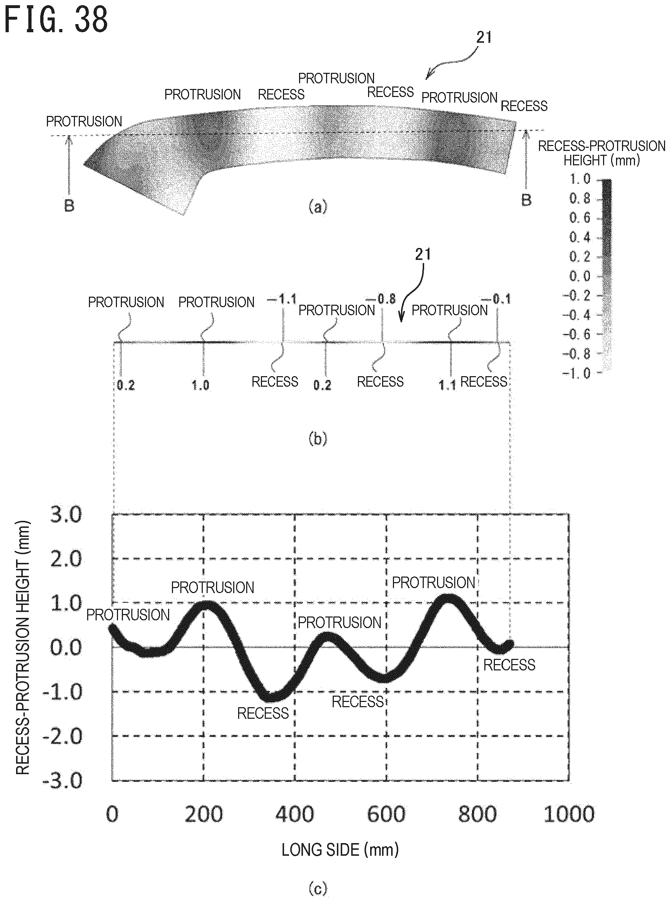

In the second actual blank press-formed article shape acquisition step S7, first, the second actual blank model 21 is generated with use of an actual blank different from the first actual blank. FIG. 38 illustrates an example of the second actual blank model 21. The following describes the second actual blank model 21 more specifically.

The second actual blank model 21 is a blank model generated based on measurement data acquired by measuring the shape of an actual blank (a second actual blank) extracted from a portion of the metal sheet having the shape variation which portion is different from the portion from which the first actual blank is extracted. Similarly to the first actual blank model 11, the shape of the second actual blank is measured by a three-dimensional shape measuring apparatus or the like including a laser range finder, for example, and the second actual blank model 21 is generated based on the measurement result.

FIG. 38(a) is a drawing illustrating the second actual blank model 21 in a plan view, and FIG. 38(b) is a sectional view taken along a line B-B in FIG. 38(a). Light and shade in FIGS. 38(a), 38B express recesses and protrusions such that a portion with dark color has a shape protruding toward the near side on the plane of paper, and a portion with light color has a shape recessed toward the deep side on the plane of paper. FIG. 38(c) illustrates a graph indicative of respective heights of the recesses and the protrusions in FIG. 38(b).

The second actual blank model 21 is a blank model having a shape variation similar to that of the second actual blank extracted from the metal sheet having the shape variation. As illustrated in FIG. 38, the second actual blank model 21 has an irregular recessed-protruding shape different from the first actual blank model 11.

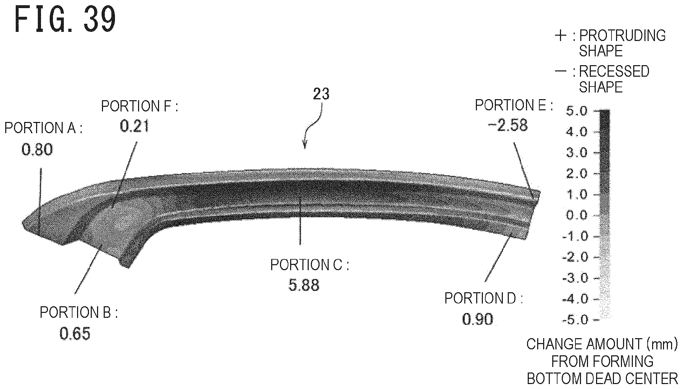

Subsequently, with use of the second actual blank model 21, press forming analysis to perform press forming by the same die model as in the reference press-formed article shape acquisition step S1 is performed. A press-formed article shape after die release is acquired as the second actual blank press-formed article shape 23. FIG. 39 illustrates the second actual blank press-formed article shape 23. Colors and values illustrated in FIG. 39 have the same meanings as those in FIGs. 34 and 36.

In the present example, as illustrated in FIG. 39, the following change amounts were found in the second actual blank press-formed article shape 23. That is, the portion A had a change amount of 0.80 mm, the portion B had a change amount of 0.65 mm, the portion C had a change amount of 5.88 mm, the portion D had a change amount of 0.90 mm, the portion E had a change amount of - 2.58 mm, and the portion F had a change amount of 0.21 mm.

### <Second Actual Deviation Amount Acquisition Step>

The second actual deviation amount acquisition step S9 is a step of comparing the reference press-formed article shape 5 with the second actual blank press-formed article shape 23 to find a deviation portion where those shapes deviate from each other, and a deviation amount in the deviation portion. A method for finding the deviation amount is similar to the method described in the first actual deviation amount acquisition step S5, and therefore, is not described herein.

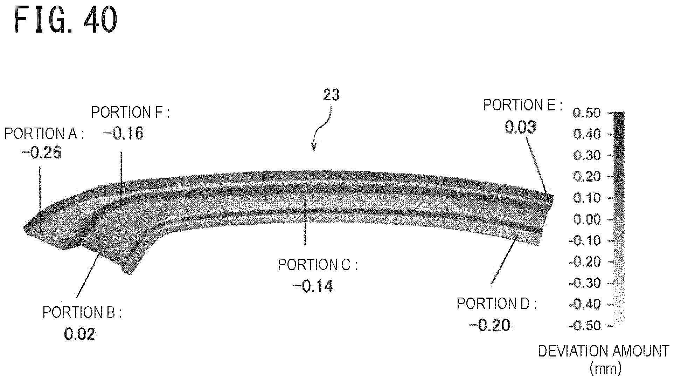

The reference press-formed article shape 5 (FIG. 34) is compared with the second actual blank press-formed article shape 23 (FIG. 39). FIG. 40 illustrates deviation amounts found therebetween at this time in such a manner as to correspond to the second actual blank press-formed article shape 23.

As illustrated in FIG. 40, the following deviation amounts were found between the second actual blank press-formed article shape 23 and the reference press-formed article shape 5. That is, the deviation amount in the portion A was -0.26 mm, the deviation amount in the portion B was 0.02 mm, the deviation amount in the portion C was -0.14 mm, the deviation amount in the portion D was -0.20 mm, the deviation amount in the portion E was 0.03 mm, and the deviation amount in the portion F was -0.16 mm.

### <Measures-required Portion Specifying Step>

The measures-required portion specifying step S11 is a step of specifying, as a measures-required portion, a portion where either of the deviation amounts found in the first actual deviation amount acquisition step S5 and the second actual deviation amount acquisition step S9 exceeds a threshold.

For example, in a case where a plurality of press-formed articles is put on top of each other and joined to each other to assemble members of a vehicle body, when the press-formed articles have a large deviation in shape (particularly, a flange portion), it is difficult to join the press-formed articles to each other. In that case, it may be necessary to take measures. In view of this, in the present embodiment, a portion expected to be largely influenced by a shape variation of an actual blank (a portion expected to have a large deviation) is specified as a measures-required portion, and measures to reduce the influence of the shape deviation are taken.

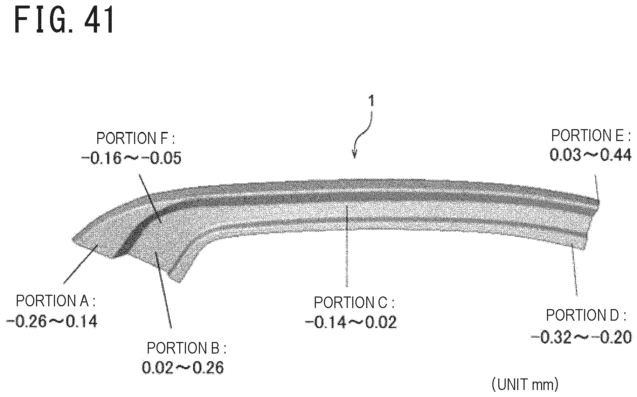

FIG. 41 illustrates ranges of both the deviation amounts (see FIG. 37) found in the first actual deviation amount acquisition step S5 and the deviation amounts (see FIG. 40) found in the second actual deviation amount acquisition step S9 in such a manner as to correspond to the target shape (the press-formed article 1).

As illustrated in FIG. 41, the following deviation amounts were found. That is, the deviation amount in the portion A was from -0.26 mm to 0.14 mm, the deviation amount in the portion B was from 0.02 mm to 0.26 mm, the deviation amount in the portion C was from -0.14 mm to 0.02 mm, the deviation amount in the portion D was from - 0.32 mm to -0.20 mm, the deviation amount in the portion E was from 0.03 mm to 0.44 mm, and the deviation amount in the portion F was -0.16 mm to -0.05 mm.

For example, the threshold in the measures-required portion specifying step S11 is ±0.20 mm. In this case, a portion having a deviation amount exceeding the threshold is the portion A, the portion B, the portion D, and the portion E. Accordingly, these portions are specified as measures-required portions in the press-formed article shape.

### <Forming Accuracy Improving Step>

The forming accuracy improving step S23 is a step of performing a correction process to reduce the deviation amount in the measures-required portion specified in the measures-required portion specifying step S11. More specifically, a process of correcting a shape of at least either one selected from a forming surface of an actual die as a press die to be used in the manufacture of a press-formed article and an actual blank as a blank to be used in the manufacture of a press-formed article is performed.

In the forming accuracy improving step S23 in the present embodiment, in order to reduce the influence of a shape variation of a blank, the actual blank to be used for press forming is corrected. Accordingly, the forming accuracy improving step S23 in the present embodiment includes a developed blank model measures-required portion specifying step S23A, and a blank bead providing step S23B.

### [Developed Blank Model Measures-required Portion Specifying Step]

The developed blank model measures-required portion specifying step S23A is a step of specifying a portion of a blank model which portion corresponds to a measures-required portion of a press-formed article shape.

In the present example, after a measures-required portion in a press-formed article shape acquired by press forming analysis is specified, the press-formed article shape is subjected to reverse forming analysis and developed to a blank model. Hereby, which portion of the blank model corresponds to the measures-required portion in the press-formed article shape can be calculated.

In the present example, a portion having a deviation amount exceeding the threshold in the first actual blank press-formed article shape 13 was the portions B, D, E (see FIG. 37). A portion having a deviation amount exceeding the threshold in the second actual blank press-formed article shape 23 was the portions A, D (see FIG. 40).

Accordingly, in the measures-required portion specifying step S11, the portions A, B, D, E were specified as measures-required portions in the press-formed article shape.

In the developed blank model measures-required portion specifying step S23A, first, the specified measures-required portions are set on one press-formed article shape. The measures-required portions in the present example are the portions A, B, D, and E.

The press-formed article shape to which the measures-required portions are set may be any of the reference press-formed article shape 5, the first actual blank press-formed article shape 13, and the second actual blank press-formed article shape 23.

Subsequently, the press-formed article shape to which the measures-required portions are set is subjected to reverse forming analysis and is developed to a blank model. When the press-formed article shape to which the measures-required portions are set is developed to the blank model, measures-required portions on the blank model can be specified.

Since the measures-required portions on the blank model are specified, measures to reduce the influence of a shape variation of a blank can be taken for the blank before press forming. In the present embodiment, as the measures, beads are provided for portions of an actual blank which portions correspond to the measures-required portions on the blank model. In view of this, an effect obtained by performing press forming with use of an actual blank provided with beads was verified by press forming analysis. The following describes this effect.

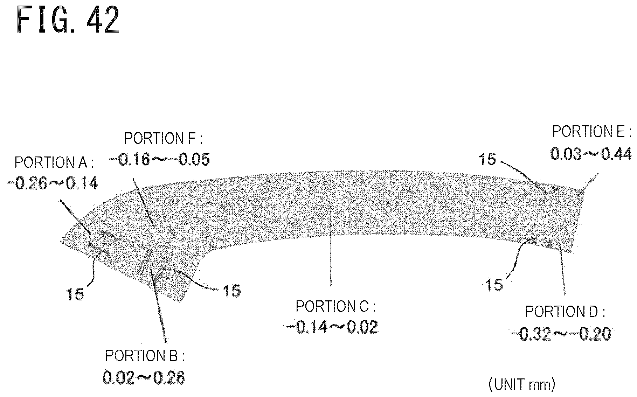

Examples of the beads to be provided for the blank are illustrated in FIG. 42. In the present embodiment, the measures-required portions (the portions A, B, D, and E) were set in the reference press-formed article shape 5. The reference press-formed article shape 5 was developed to specify measures-required portions on the flat blank model 3. Then, beads were provided for the measures-required portions on the flat blank model 3.

Note that FIG. 42 also illustrates portions corresponding to the portions A to E of the reference press-formed article shape 5 and respective ranges (the same as in FIG. 41) of deviation amounts to be caused in those portions.

As illustrated in FIG. 42, portions of the blank model which portions corresponded to the measures-required portions in the press-formed article shape, that is, the portions A, B, D, E were set as measures-required portions on the blank model. Then, beads 15 were provided for the portions A, B, D, and E on the blank model. In the example of FIG. 42, each bead 15 is provided in a direction where its longitudinal direction intersects with or is parallel to an end side of the blank model. However, the bead of the present invention is not limited to this. For example, the bead may be provided in a direction along the advancing direction of corrugations of the first actual blank model 11 or the second actual blank model 21 (along a pitch direction of recesses and protrusions).

In the present example, the beads 15 were also provided for the first actual blank model 11 and the second actual blank model 21 in a similar manner. Then, similar analysis was performed from the reference press-formed article shape acquisition step S1 to the second actual deviation amount acquisition step S9 with use of each blank model provided with the beads 15.

Note that change amounts and deviation amounts described in the following description were found in the same manner as those illustrated in FIGs. 34 to 41.

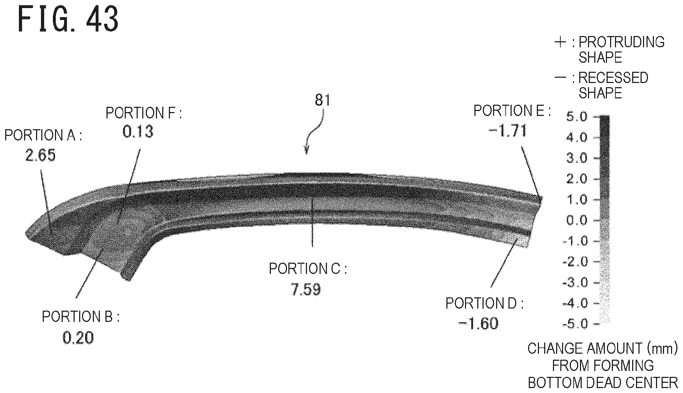

FIG. 43 illustrates a bead-provided reference press-formed article shape 81 acquired by performing press forming analysis on the flat blank model 3 provided with the beads 15 as illustrated in FIG. 42.

As illustrated in FIG. 43, the following change amounts were found in the bead-provided reference press-formed article shape 81. That is, the portion A had a change amount of 2.65 mm, the portion B had a change amount of 0.20 mm, the portion C had a change amount of 7.59 mm, the portion D had a change amount of -1.60 mm, the portion E had a change amount of -1.71 mm, and the portion F had a change amount of 0.13 mm.

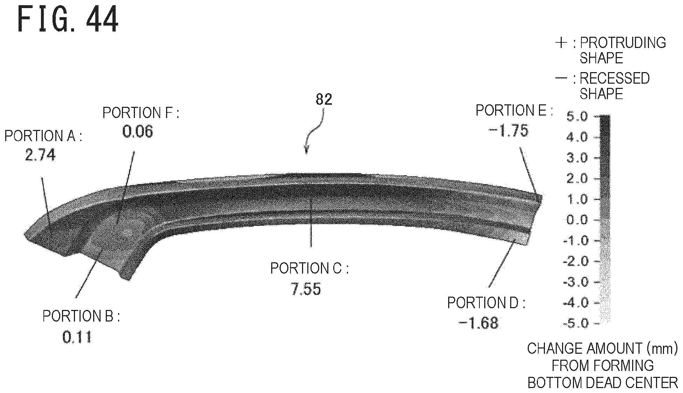

Subsequently, the beads 15 similar to those in FIG. 42 were provided for the first actual blank model 11 in FIG. 35. FIG. 44 illustrates a bead-provided first actual blank press-formed article shape 82 acquired by performing press forming analysis on the first actual blank model 11 provided with the beads 15.

As illustrated in FIG. 44, the following change amounts were found in the bead-provided first actual blank press-formed article shape 82. That is, the portion A had a change amount of 2.74 mm, the portion B had a change amount of 0.11 mm, the portion C had a change amount of 7.55 mm, the portion D had a change amount of -1.68 mm, the portion E had a change amount of -1.75 mm, and the portion F had a change amount of 0.06 mm.

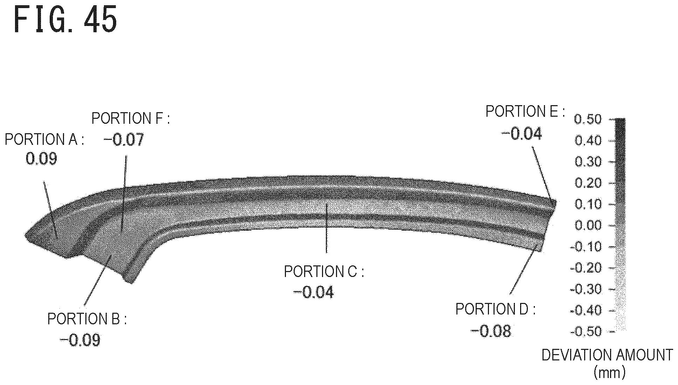

FIG. 45 illustrates deviation amounts found in comparison between the bead-provided reference press-formed article shape 81 (FIG. 43) and the bead-provided first actual blank press-formed article shape 82 (FIG. 44), similarly to the first actual deviation amount acquisition step S5.

As illustrated in FIG. 45, the following deviation amounts were found between the bead-provided first actual blank press-formed article shape 82 and the bead-provided reference press-formed article shape 81. That is, the deviation amount in the portion A was 0.09 mm, the deviation amount in the portion B was -0.09 mm, the deviation amount in the portion C was -0.04 mm, the deviation amount in the portion D was -0.08 mm, the deviation amount in the portion E was -0.04 mm, and the deviation amount in the portion F was -0.07 mm.

As described above, the deviation amounts in the case of the blank model provided with the beads 15 are markedly reduced in comparison with the deviation amounts (see FIG. 37) in the case of the blank model with no bead 15. Thus, it is found that the beads 15 provided for the blank model reduce the influence of the shape variation of the blank before press forming on the dimensional accuracy of the press-formed article.

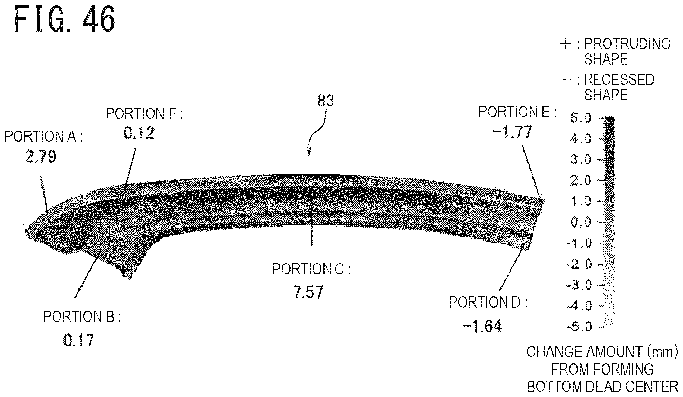

Subsequently, the beads 15 similar to those in FIG. 42 were provided for the second actual blank model 21 in FIG. 38. FIG. 46 illustrates a bead-provided second actual blank press-formed article shape 83 acquired by performing press forming analysis on the second actual blank model 21 provided with the beads 15.

As illustrated in FIG. 46, the following change amounts were found in the bead-provided second actual blank press-formed article shape 83. That is, the portion A had a change amount of 2.79 mm, the portion B had a change amount of 0.17 mm, the portion C had a change amount of 7.57 mm, the portion D had a change amount of -1.64 mm, the portion E had a change amount of -1.77 mm, and the portion F had a change amount of 0.12 mm.

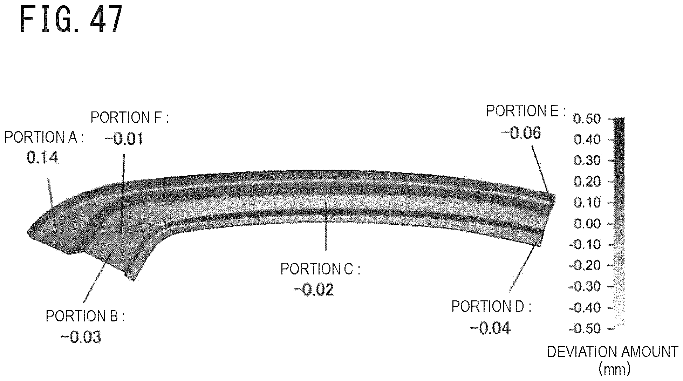

Similarly to the second actual deviation amount acquisition step S9, the bead-provided reference press-formed article shape 81 (FIG. 43) was compared with the bead-provided second actual blank press-formed article shape 83 (FIG. 46). FIG. 47 illustrates deviation amounts found in the comparison.

As illustrated in FIG. 47, the following deviation amounts were found between the bead-provided second actual blank press-formed article 25 and the bead-provided reference press-formed article shape 81. That is, the deviation amount in the portion A was 0.14 mm, the deviation amount in the portion B was -0.03 mm, the deviation amount in the portion C was -0.02 mm, the deviation amount in the portion D was -0.04 mm, the deviation amount in the portion E was -0.06 mm, and the deviation amount in the portion F was -0.01 mm.

Even in the case of the second actual blank model, the deviation amounts in the blank model provided with the beads 15 are markedly reduced in comparison with the deviation amounts (see FIG. 40) in the case of the blank model with no bead 15. That is, it can be found that the influence of the shape variation of the blank is reduced.

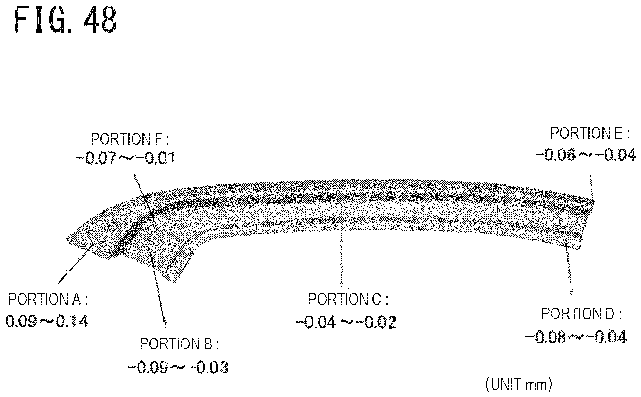

FIG. 48 illustrates both the deviation amounts (see FIG. 45) found in the first actual deviation amount acquisition step S5 and the deviation amounts (see FIG. 47) found in the second actual deviation amount acquisition step S9 in such a manner as to correspond to the target shape.

As illustrated in FIG. 48, the following deviation amounts were found in a case where a blank model was provided with the beads 15. That is, the deviation amount in the portion A was from 0.09 to 0.14 mm, the deviation amount in the portion B was -0.09 mm to -0.03 mm, the deviation amount in the portion C was -0.04 mm to -0.02 mm, the deviation amount in the portion D was -0.08 mm to -0.04 mm, the deviation amount in the portion E was -0.06 mm to -0.04 mm, and the deviation amount in the portion F was -0.07 mm to -0.01 mm. Thus, the deviation amounts are markedly reduced in comparison with the deviation amounts before measures are taken as illustrated in FIG. 41.

As the analysis result, the beads 15 were provided for the measures-required portions on the blank model which measured-required portions were specified in the developed blank model measures-required portion specifying step S23A. Hereby, it was verified that the influence of the shape variation of the blank was reduced, and the dimensional accuracy of the press-formed article shape was improved.

### [Blank Bead Providing Step]

The blank bead providing step S23B is a step of providing the bead 15 to a portion of an actual blank which portion corresponds to the measures-required portion specified in the developed blank model measures-required portion specifying step S23A.

First, the portion of the actual blank which portion corresponds to the measures-required portion (the portions A, B, D, and E in FIG. 42) specified in the developed blank model measures-required portion specifying step S23A is set as a measures-required portion in the actual blank.

Then, preforming to provide the bead 15 similar to that in FIG. 42 for the measures-required portion thus set in the actual blank is performed.

Note that, at the time when a bead is provided for the actual blank, the bead should be provided like the bead 15 formed in the portion B, the portion D, or the portion E in FIG. 42. That is, the bead should be provided such that its longitudinal direction is along a direction intersecting with an end side of the actual blank which end side is closest to the measures-required portion. Note that, in a case where the bead cannot be set on the end side closest to the measures-required portion for component design reasons or the like, the bead is set in a vicinal area where the bead can be set, e.g., the vicinity of the measures-required portion or the like.

By providing the bead for an end portion of the actual blank which end portion causes a poor dimensional accuracy in the press-formed article, it is possible to improve the rigidity of an end portion of the press-formed article, to hold down corrugations of the actual blank which corrugations remain in the press-formed article from the actual blank before press forming, and to further improve the dimensional accuracy.

In a case where press forming is performed on an actual blank having a shape variation in which recesses and protrusions are consecutive, the bead may be provided as follows. That is, the bead 15 may be provided for the actual blank such that, in the measures-required portion or its vicinal portion in the actual blank, the longitudinal direction of the bead is along a direction where the recesses and the protrusions in the shape variation of the actual blank are consecutive. Here, it is preferable that the bead 15 be provided such that its longitudinal direction is along the direction where the recesses and the protrusions in the shape variation of the actual blank are consecutive, in the measures-required portion of the actual blank. However, in a case where the bead cannot be provided for the measures-required portion for component design reasons or the like, the bead may be provided such that the longitudinal direction is along the direction where the recesses and the protrusions in the shape variation of the actual blank are consecutive, in the vicinal portion around the measures-required portion of the actual blank, for example.

It is noted that the bead may have a protruding shape or a recessed shape. The length, width, or height of the bead should be determined appropriately to correspond to an allowable degree from a shape required for a target press-formed article in consideration of an acceptable height or pitch of the corrugations (shape variation) remaining in the press-formed article.

The shape of the bead can be a circular shape, an oval shape, an elliptical shape, a square shape, a rectangular shape, a triangular shape, a diamond shape, or the like in a top view. Furthermore, a mountain shape, a trapezoidal shape, a semicircular shape, a semielliptical shape, or the like is also applicable in a side view.

### <Bead-provided Actual Blank Press Forming Step>

The bead-provided actual blank press forming step S25 is a step of performing press forming on the actual blank provided with the bead 15 in a portion corresponding to the measures-required portion specified in the developed blank model measures-required portion specifying step S23A. The bead-provided actual blank press forming step S25 corresponds to a forming step.

That is, press forming is performed on the actual blank provided with the bead 15 by an actual die of the same type as the predetermined die model in the press forming analysis described above.

That is, press forming is performed on the actual blank provided with the bead 15 by an actual die of the same type as the die model in the press forming analysis described above.

When press forming is performed after the bead 15 is provided for an actual blank having a shape variation, the shape of a press-formed article after press forming can be less influenced by the shape variation of the blank as illustrated in an analysis result in FIG. 48. Accordingly, even in comparison with a press-formed article shape acquired by performing press forming analysis on the flat blank model, its deviation amount is less than ±0.20 mm, so that it is possible to acquire a press-formed article with an excellent dimensional accuracy.

Thus, the corrugations of the actual blank can be held down, and it is possible to achieve a press-formed article with an excellent dimensional accuracy by performing press forming with the corrugations of the actual blank being held down.

The bead provided for the actual blank may be crushed in press forming. Hereby, a portion provided with the bead and its peripheral portion receive strain and harden due to the strain, so that the rigidity further improves and the corrugations remaining in the press-formed article can be held down, thereby making it possible to improve dimensional accuracy.

In the above present embodiment, it is possible to specify a portion largely influenced by a shape variation of a blank and to take appropriate measures for an actual blank before press forming. Accordingly, it is possible to stably acquire a press-formed article with an excellent dimensional accuracy.

Further, in the present embodiment, a plurality of patterns of blank models for a blank having a shape variation is generated, and measures-required portions are specified by finding deviation amounts in each of the patterns. Accordingly, the present embodiment is achieved in consideration of differences in shape variation between individual actual blanks.

It is noted that, in the above description, a second actual blank model of only one type is generated, but second actual blank models of several types may be generated. In that case, a plurality of second actual blanks is extracted from different portions of a metal sheet having a shape variation to generate the second actual blank models of the several types.

When the number of patterns for an actual blank model having a shape variation is increased, the shape variation of the actual blank can be dealt with more accurately.

Further, in the above description, the press-formed article shape in the case of a flat blank model is compared with the press-formed article shape in the case of a blank model including recesses and protrusions. In this comparison, a difference therebetween in the change amount from the forming bottom dead center in the press forming direction is taken as the deviation amount. However, the present invention is not limited to this.

For example, a difference acquired by subtracting the height, in the press forming direction, of a portion in the press-formed article shape after die release in the case of the flat blank model from the height of its corresponding portion of the press-formed article shape after die release (after spring back) in the case of the blank model including recesses and protrusions may be taken as the deviation amount.

In this case, it is necessary to set a common fixed point in the two press-formed article shapes, and the deviation amount may fluctuate depending on how to select the fixed point.

In this respect, when change amounts based on the shape at the forming bottom dead center, which is constant regardless of the shape of the blank, are compared with each other like the present embodiment, the deviation amount can be accurately and easily found, and this is preferable.

The present embodiment deals with stamping as an example, but even when the present embodiment is carried out in drawing, an excellent dimensional accuracy can be achieved similarly to stamping.

The forming accuracy improving step S23 may further include the bead providing step S13A in the first embodiment. In this case, at least either of the blank bead providing step S23B and the bead providing step S13A may be performed selectively based on a predetermined condition such as a target accuracy.

This disclosure can also take the following configurations.
(1) A press-formed article manufacturing method is a method for manufacturing a press-formed article by performing press forming with use of a press die on a blank extracted from a metal sheet having a shape variation, and the press-formed article manufacturing method includes: a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article; a first actual blank press-formed article shape acquisition step of acquiring a press-formed article shape after die release as a first actual blank press-formed article shape by generating a first actual blank model based on measurement data acquired by measuring a first actual blank extracted from the metal sheet having the shape variation, and performing press forming analysis to perform press forming with use of the generated first actual blank model by the predetermined die model; a first actual deviation amount acquisition step of finding a deviation portion where the reference press-formed article shape and the first actual blank press-formed article shape deviate from each other, and a first actual deviation amount as a deviation amount in the deviation portion, by comparing the reference press-formed article shape with the first actual blank press-formed article shape; a second actual blank press-formed article shape acquisition step of acquiring a press-formed article shape after die release as a second actual blank press-formed article shape by generating a second actual blank model of at least one type based on measurement data acquired by measuring a second actual blank extracted from a portion of the metal sheet having the shape variation which portion is different from a portion from which the first actual blank is extracted, and performing press forming analysis to perform press forming with use of the generated second actual blank model by the predetermined die model; a second actual deviation amount acquisition step of finding a deviation portion where the reference press-formed article shape and the second actual blank press-formed article shape of the at least one type deviate from each other, and a second actual deviation amount as a deviation amount in the deviation portion, by comparing the reference press-formed article shape with the second actual blank press-formed article shape of the at least one type; a measures-required portion specifying step of specifying, as measures-required portions, respective portions of the press-formed article which portions correspond to a portion having a deviation amount exceeding a predetermined threshold as the first actual deviation amount and a portion having a deviation amount exceeding the predetermined threshold as the second actual deviation amount; and a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.
(2) The first actual deviation amount acquisition step acquires, as the first actual deviation amount, a difference between a spring back amount in a predetermined portion of the reference press-formed article shape and a spring back amount in a portion of the first actual blank press-formed article shape which portion corresponds to the predetermined portion of the reference press-formed article shape. The second actual deviation amount acquisition step acquires, as the second actual deviation amount, a difference between a spring back amount in a predetermined portion of the reference press-formed article shape and a spring back amount in a portion of the second actual blank press-formed article shape which portion corresponds to the predetermined portion of the reference press-formed article shape.
(3) The forming accuracy improving step includes a bead providing step of providing beads for portions of the forming surface of the actual die which portions are to form the measures-required portions, or the measures-required portions and peripheral portions around the measures-required portions.
(4) In the bead providing step, each of the beads is provided for the actual die such that a longitudinal direction of a bead mark formed on the press-formed article by the each of the beads provided for the actual die is along a direction intersecting with or parallel to an end side of the press-formed article which end side is closest to a corresponding measures-required portion.
(5) The actual blank has a shape variation in which recesses and protrusions are consecutive along a predetermined direction. In the bead providing step, each of the beads is provided for the actual die such that, in a corresponding measures-required portion of the press-formed article, a longitudinal direction of a bead mark formed on the press-formed article by the each of the beads provided for the actual die is along a direction where the recesses and the protrusions in the shape variation of the blank are consecutive.
(6) The press-formed article manufacturing method further includes: an actual press forming step of performing press forming on the blank with use of the actual die provided with the beads, in such a manner as to form bead marks in the measures-required portions in the press-formed article or in the measures-required portions and respective peripheral portions around the measures-required portions; and a restriking step of performing repressing on the press-formed article acquired by the press forming in the actual press forming step and crushing the bead marks.
(7) The forming accuracy improving step includes: a developed blank model measures-required portion specifying step of specifying measures-required portions in a developed blank model acquired by setting the measures-required portions on any of the reference press-formed article shape, the first actual blank press-formed article shape, and the second actual blank press-formed article shape, and developing, to a blank model, the any of the reference press-formed article shape, the first actual blank press-formed article shape, and the second actual blank press-formed article shape; and a blank bead providing step of providing beads for portions of the actual blank which portions correspond to the measures-required portions specified in the developed blank model measures-required portion specifying step.
(8) In the blank bead providing step, each of the beads is provided for the actual blank such that a longitudinal direction of the each of the beads is along a direction intersecting with an end side of the actual blank which end side is closest to a corresponding measures-required portion.
(9) The actual blank has a shape variation in which recesses and protrusions are consecutive along a predetermined direction. In the blank bead providing step, each of the beads is provided for the actual blank such that, in a corresponding measures-required portion of the actual blank, a longitudinal direction of the each of the beads provided for the blank is along a direction where the recesses and the protrusions in the shape variation of the actual blank are consecutive.
(10) The press-formed article manufacturing method includes: a forming step of performing press forming on the actual blank provided with the beads by the actual die; and a step of performing press forming to crush the beads after the forming step.

Here, Japanese Patent Application No. 2022-130912 (filed on August 19, 2022) and Japanese Patent Application No. 2022-198306 (filed on December 13, 2022) to which the present application claims priority are incorporated herein by reference in their entirety. Herein, the present invention has been described referring to a limited number of embodiments, but the scope of the present invention is not limited to them, and it is obvious for a person skilled in the art that the embodiments are modifiable based on the disclosure.

### Reference Signs List

- 1:: press-formed article (target shape)
- 3:: flat blank model
- 5:: reference press-formed article shape
- 11:: first actual blank model
- 13:: first actual blank press-formed article shape
- 15:: bead
- 21:: second actual blank model
- 23:: second actual blank press-formed article shape
- 31:: reference press-formed article shape
- 32:: bead mark
- 33:: first actual blank press-formed article shape
- 41:: second actual blank press-formed article shape
- 51:: reference press-formed article shape
- 53:: first actual blank press-formed article shape
- 61:: second actual blank model
- 63:: second actual blank press-formed article shape
- 71:: reference press-formed article shape
- 73:: first actual blank press-formed article shape
- 75:: second actual blank press-formed article shape

## Claims

1. A press-formed article manufacturing method for manufacturing a press-formed article by performing press forming with use of a press die on a blank extracted from a metal sheet having a shape variation, the press-formed article manufacturing method comprising:
a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article;
a first actual blank press-formed article shape acquisition step of acquiring a press-formed article shape after die release as a first actual blank press-formed article shape by generating a first actual blank model based on measurement data acquired by measuring a first actual blank extracted from the metal sheet having the shape variation, and performing press forming analysis to perform press forming with use of the generated first actual blank model by the predetermined die model;
a first actual deviation amount acquisition step of finding a deviation portion where the reference press-formed article shape and the first actual blank press-formed article shape deviate from each other, and a first actual deviation amount as a deviation amount in the deviation portion, by comparing the reference press-formed article shape with the first actual blank press-formed article shape;
a second actual blank press-formed article shape acquisition step of acquiring a press-formed article shape after die release as a second actual blank press-formed article shape by generating a second actual blank model of at least one type based on measurement data acquired by measuring a second actual blank extracted from a portion of the metal sheet having the shape variation which portion is different from a portion from which the first actual blank is extracted, and performing press forming analysis to perform press forming with use of the generated second actual blank model by the predetermined die model;
a second actual deviation amount acquisition step of finding a deviation portion where the reference press-formed article shape and the second actual blank press-formed article shape of the at least one type deviate from each other, and a second actual deviation amount as a deviation amount in the deviation portion, by comparing the reference press-formed article shape with the second actual blank press-formed article shape of the at least one type;
a measures-required portion specifying step of specifying, as measures-required portions, respective portions of the press-formed article which portions correspond to a portion having a deviation amount exceeding a predetermined threshold as the first actual deviation amount and a portion having a deviation amount exceeding the predetermined threshold as the second actual deviation amount; and
a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.

2. The press-formed article manufacturing method according to claim 1, wherein:
the first actual deviation amount acquisition step acquires, as the first actual deviation amount, a difference between a spring back amount in a predetermined portion of the reference press-formed article shape and a spring back amount in a portion of the first actual blank press-formed article shape which portion corresponds to the predetermined portion of the reference press-formed article shape; and
the second actual deviation amount acquisition step acquires, as the second actual deviation amount, a difference between a spring back amount in a predetermined portion of the reference press-formed article shape and a spring back amount in a portion of the second actual blank press-formed article shape which portion corresponds to the predetermined portion of the reference press-formed article shape.

3. The press-formed article manufacturing method according to claim 1 or 2, wherein
the forming accuracy improving step includes a bead providing step of providing beads for portions of the forming surface of the actual die which portions are to form the measures-required portions, or the measures-required portions and peripheral portions around the measures-required portions.

4. The press-formed article manufacturing method according to claim 3, wherein
in the bead providing step, each of the beads is provided for the actual die such that a longitudinal direction of a bead mark formed on the press-formed article by the each of the beads provided for the actual die is along a direction intersecting with or parallel to an end side of the press-formed article which end side is closest to a corresponding measures-required portion.

5. The press-formed article manufacturing method according to claim 3, wherein:
the actual blank has a shape variation in which recesses and protrusions are consecutive along a predetermined direction; and
in the bead providing step, each of the beads is provided for the actual die such that, in a corresponding measures-required portion of the press-formed article, a longitudinal direction of a bead mark formed on the press-formed article by the each of the beads provided for the actual die is along a direction where the recesses and the protrusions in the shape variation of the blank are consecutive.

6. The press-formed article manufacturing method according to any one of claims 3 to 5, further comprising:
an actual press forming step of performing press forming on the blank with use of the actual die provided with the beads, in such a manner as to form bead marks in the measures-required portions in the press-formed article or in the measures-required portions and respective peripheral portions around the measures-required portions; and
a restriking step of performing repressing on the press-formed article acquired by the press forming in the actual press forming step and crushing the bead marks.

7. The press-formed article manufacturing method according to any one of claims 1 to 6, wherein
the forming accuracy improving step includes:
a developed blank model measures-required portion specifying step of specifying measures-required portions in a developed blank model acquired by setting the measures-required portions on any of the reference press-formed article shape, the first actual blank press-formed article shape, and the second actual blank press-formed article shape, and developing, to a blank model, the any of the reference press-formed article shape, the first actual blank press-formed article shape, and the second actual blank press-formed article shape; and
a blank bead providing step of providing beads for portions of the actual blank which portions correspond to the measures-required portions specified in the developed blank model measures-required portion specifying step.

8. The press-formed article manufacturing method according to claim 7, wherein
in the blank bead providing step, each of the beads is provided for the actual blank such that a longitudinal direction of the each of the beads is along a direction intersecting with an end side of the actual blank which end side is closest to a corresponding measures-required portion.

9. The press-formed article manufacturing method according to claim 7 or claim 8, wherein:
the actual blank has a shape variation in which recesses and protrusions are consecutive along a predetermined direction; and
in the blank bead providing step, each of the beads is provided for the actual blank such that, in a corresponding measures-required portion of the actual blank, a longitudinal direction of the each of the beads provided for the blank is along a direction where the recesses and the protrusions in the shape variation of the actual blank are consecutive.

10. The press-formed article manufacturing method according to any one of claims 7 to 9, further comprising:
a forming step of performing press forming on the actual blank provided with the beads by the actual die; and
a step of performing press forming to crush the beads after the forming step.
